# EUROPEAN PATENT APPLICATION

(11) **EP 4 503 685 A1**
(43) Date of publication of application: **05.02.2025**
(21) Application number: 23778187.7
(22) Date of filing: 28.03.2023
(51) Int. Cl.: H04W 8/14

(54) **NETWORK ELEMENT REGISTRATION METHODS, MODEL DETERMINATION METHOD, APPARATUSES, NETWORK ELEMENTS, COMMUNICATION SYSTEM AND STORAGE MEDIUM**

(30) Priority: 28.03.2022 CN 202210317250; 22.11.2022 CN 202211468901
(71) Applicant: Vivo Mobile Communication Co., Ltd., Dongguan, Guangdong 523863 (CN)
(72) Inventor: CHENG, Sihan, Dongguan, Guangdong 523863 (CN); CHONG, Weiwei, Dongguan, Guangdong 523863 (CN)
(74) Representative: Murgitroyd & Company
(86) International application number: PCT/CN2023/084355
(87) International publication number: WO 2023/185822

(57) **Abstract**

This application discloses a network element registration method and apparatus, a model determining method and apparatus, a network element, a communication system, and a storage medium. The network element registration method in embodiments of this application includes: sending, by a first network element, a registration request to a second network element, where the registration request is used to request registration of federated learning capability information of the first network element with the second network element, and the federated learning capability information of the first network element includes at least one of the following: type information of federated learning training supported by the first network element, time information of federated learning training supported by the first network element, and metadata information possessed by the first network element.

## Description

### CROSS-REFERENCE TO RELATED APPLICATION

This application claims priority to Chinese Patent Application No. 202210317250.2 filed in China on March 28, 2022, and to Chinese Patent Application No. 202211468901.4 filed in China on November 22, 2022, which are incorporated herein by reference in their entireties.

### TECHNICAL FIELD

This application pertains to the field of communication technologies, and specifically, relates to a network element registration method and apparatus, a model determining method and apparatus, a network element, a communication system, and a storage medium.

### BACKGROUND

With continuous development of communication technologies, the federated learning technology emerges. Federated learning allows cooperation between multiple clients through coordination of one central server to obtain one complete machine learning model. However, in the prior art, the artificial intelligence algorithm of federated learning is not additionally enhanced or treated differently. For example, all participants such as network elements, base stations, and user equipments (User Equipment, UE) capable of training can participate in federated learning by default. As a result, objects selected for federated learning without filtering may cause problems such as loss of federated learning objects and reduction of learning efficiency due to various reasons (for example, relatively poor network signals for UEs). Therefore, how to enhance a network element registration procedure in federated learning is an issue to be addressed urgently.

### SUMMARY

Embodiments of this application provide a network element registration method and apparatus, a model determining method and apparatus, a network element, a communication system, and a storage medium, which can address the issue of how to enhance the network element registration procedure in federated learning.

According to a first aspect, a network element registration method is provided, where the method includes: sending, by a first network element, a registration request to a second network element, where the registration request is used to request registration of federated learning capability information of the first network element with the second network element, and the federated learning capability information of the first network element includes at least one of the following: type information of federated learning training supported by the first network element, time information of federated learning training supported by the first network element, and metadata information possessed by the first network element.

According to a second aspect, a network element registration apparatus is provided, which is applied to a first network element. The network element registration apparatus includes a sending module. The sending module is configured to send a registration request to a second network element, where the registration request is used to request registration of federated learning capability information of the first network element with the second network element, and the federated learning capability information of the first network element includes at least one of the following: type information of federated learning training supported by the first network element, time information of federated learning training supported by the first network element, and metadata information possessed by the first network element.

According to a third aspect, a network element registration method is provided, where the method includes: receiving, by a second network element, a registration request sent by a first network element, where the registration request is used to request registration of federated learning capability information of the first network element with the second network element, and the federated learning capability information of the first network element includes at least one of the following: type information of federated learning training supported by the first network element, time information of federated learning training supported by the first network element, and metadata information possessed by the first network element.

According to a fourth aspect, a network element registration apparatus is provided, which is applied to a second network element. The network element registration apparatus includes a receiving module. The receiving module is configured to receive a registration request sent by a first network element, where the registration request is used for requesting registration of federated learning capability information of the first network element to a second network element, and the federated learning capability information of the first network element includes at least one of the following: type information of federated learning training supported by the first network element, time information of federated learning training supported by the first network element, and metadata information possessed by the first network element.

According to a fifth aspect, a model determining method is provided. The method includes: sending, by a third network element, a discovery request to a second network element. The discovery request is used to request to discover a network element capable of federated learning training, and the discovery request includes first information, where the first information includes at least one of the following: analytics ID information corresponding to a target task, type information of federated learning training corresponding to the target task, time information of federated learning training corresponding to the target task, metadata information of a network element of federated learning training corresponding to the target task, network element type requirement information, and network element quantity requirement information. The network element type requirement information is used to indicate a network element type corresponding to a to-be-discovered network element capable of federated learning training, where the network element type includes a federated learning server network element type and/or a federated learning client network element type; and the network element quantity requirement information is used to indicate a requirement on the quantity of to-be-discovered network elements capable of federated learning training.

According to a sixth aspect, a model determining apparatus is provided. The model determining apparatus includes a sending module. The sending module is further configured to send a discovery request to a second network element. The discovery request is used to request to discover a network element capable of federated learning training, and the discovery request includes first information, where the first information includes at least one of the following: analytics ID information corresponding to a target task, type information of federated learning training corresponding to the target task, time information of federated learning training corresponding to the target task, metadata information of a network element of federated learning training corresponding to the target task, network element type requirement information, and network element quantity requirement information. The network element type requirement information is used to indicate a network element type corresponding to a to-be-discovered network element capable of federated learning training, where the network element type includes a federated learning server network element type and/or a federated learning client network element type; and the network element quantity requirement information is used to indicate a requirement on the quantity of to-be-discovered network elements capable of federated learning training.

According to a seventh aspect, a network element is provided, where the network element includes a processor and a memory, and a program or instructions executable on the processor are stored in the memory. When the program or the instructions are executed by the processor, the steps of the network element registration method according to the first aspect are implemented.

According to an eighth aspect, a network element is provided, including a processor and a communication interface, where the communication interface is configured to send a registration request to a second network element, where the registration request is used to request registration of federated learning capability information of the first network element with the second network element, and the federated learning capability information of the first network element includes at least one of the following: type information of federated learning training supported by the first network element, time information of federated learning training supported by the first network element, and metadata information possessed by the first network element.

According to a ninth aspect, a network element is provided, where the network element includes a processor and a memory, and a program or instructions executable on the processor are stored in the memory. When the program or the instructions are executed by the processor, the steps of the network element registration method according to the third aspect are implemented.

According to a tenth aspect, a network element is provided, including a processor and a communication interface, where the communication interface is configured to receive a registration request sent by a first network element, where the registration request is used to request registration of federated learning capability information of the first network element to a second network element, and the federated learning capability information of the first network element includes at least one of the following: type information of federated learning training supported by the first network element, time information of federated learning training supported by the first network element, and metadata information possessed by the first network element.

According to an eleventh aspect, a network element is provided, where the network element includes a processor and a memory, and a program or instructions executable on the processor are stored in the memory. When the program or the instructions are executed by the processor, the steps of the model determining method according to the fifth aspect are implemented.

According to a twelfth aspect, a network element is provided, including a processor and a communication interface. The communication interface is configured to send a discovery request to a second network element, where the discovery request is used to request to discover a network element capable of federated learning training, and the discovery request includes first information, where the first information includes at least one of the following: analytics ID information corresponding to a target task, type information of federated learning training corresponding to the target task, time information of federated learning training corresponding to the target task, metadata information of a network element of federated learning training corresponding to the target task, network element type requirement information, and network element quantity requirement information. The network element type requirement information is used to indicate a network element type corresponding to a to-be-discovered network element capable of federated learning training, where the network element type includes a federated learning server network element type and/or a federated learning client network element type; and the network element quantity requirement information is used to indicate a requirement on the quantity of to-be-discovered network elements capable of federated learning training.

According to a thirteenth aspect, a communication system is provided, including a network element registration apparatus according to the second aspect, a network element registration apparatus according to the fourth aspect, and a model determining apparatus according to the sixth aspect; or including the network element according to the seventh aspect, the ninth aspect, and the eleventh aspect; or including the network element according to the eighth aspect, the tenth aspect, and the twelfth aspect. The network element may be configured to perform the steps of the method according to the first aspect, the third aspect, and the fifth aspect.

According to a fourteenth aspect, a readable storage medium is provided, where a program or instructions are stored in the readable storage medium; and when the program or the instructions are executed by a processor, the steps of the method according to the first aspect are implemented, or the steps of the method according to the third aspect are implemented, or the steps of the method according to the fifth aspect are implemented.

According to a fifteenth aspect, a chip is provided, where the chip includes a processor and a communication interface, the communication interface is coupled to the processor, and the processor is configured to run a program or instructions to implement the method according to the first aspect, or implement the method according to the third aspect, or implement the method according to the fifth aspect.

According to a sixteenth aspect, a computer program/program product is provided, where the computer program/program product is stored in a storage medium, and the computer program/program product is executed by at least one processor to implement the steps of the network element registration method according to the first aspect, or the steps of the network element registration method according to the third aspect, or the steps of the model determining method according to the fifth aspect.

In the embodiments of this application, the first network element can register the federated learning capability information of the first network element with the second network element through a registration request, so as to implement registration of the first network element with the second network element, thereby enabling other network elements to discover, through the second network element, the first network element capable of federated learning training. This resolves the problem of how the first network element registers the federated learning capability information with the second network element and can be discovered by other network elements.

The second network element may receive a registration request sent by the first network element to register the federated learning capability information of the first network element with the second network element, so as to implement registration of the first network element with the second network element, thereby enabling other network elements to discover, through the second network element, the first network element capable of federated learning training. This resolves the problem of how the first network element registers the federated learning capability information with the second network element and can be discovered by other network elements.

The third network element may search, through the discovery request, the second network element for a network element capable of federated learning training. The discovery request includes first information; therefore, the third network element can discover the target network element matching the first information, so as to perform federated learning training along with the discovered target network element capable of federated learning training.

### BRIEF DESCRIPTION OF DRAWINGS

FIG. 1 is a schematic architectural diagram of a wireless communication system according to an embodiment of this application;
FIG. 2 is a schematic diagram of principles of horizontal federated learning according to an embodiment of this application;
FIG. 3 is a schematic diagram of a neural network according to an embodiment of this application;
FIG. 4 is a schematic diagram of a neuron according to an embodiment of this application;
FIG. 5 is a first flowchart of a network element registration method according to an embodiment of this application;
FIG. 6 is a second flowchart of a network element registration method according to an embodiment of this application;
FIG. 7 is a third flowchart of a network element registration method according to an embodiment of this application;
FIG. 8 is a fourth flowchart of a network element registration method according to an embodiment of this application;
FIG. 9 is a first flowchart of a model determining method according to an embodiment of this application;
FIG. 10 is a second flowchart of a model determining method according to an embodiment of this application;
FIG. 11 is a third flowchart of a model determining method according to an embodiment of this application;
FIG. 12 is a fourth flowchart of a model determining method according to an embodiment of this application;
FIG. 13 is a flowchart of a network element registration method and a model determining method according to an embodiment of this application;
FIG. 14 is a first schematic structural diagram of a network element registration apparatus according to an embodiment of this application.
FIG. 15 is a second schematic structural diagram of a network element registration apparatus according to an embodiment of this application.
FIG. 16 is a schematic structural diagram of a model determining apparatus according to an embodiment of this application;
FIG. 17 is a schematic structural diagram of hardware of a communication device according to an embodiment of this application; and
FIG. 18 is a schematic structural diagram of hardware of a network element according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

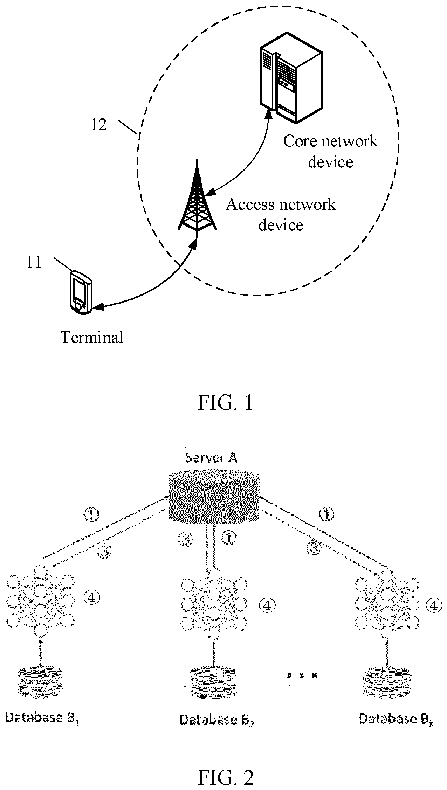

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point or a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

Some concepts and/or terms involved in the network element registration method and apparatus, the model determining method and apparatus, the network element, the communication system, and the storage medium provided in the embodiments of this application are described below.

### 1. Horizontal federated learning:

Applicable scenario: The essence of horizontal federated learning is a combination of samples, which is applicable to scenarios with a same service form for participants but different clients, that is, with many characteristics overlapping and few users overlapping, for example, a same service (such as a video service, a voice service, or an over the top (Over The Top, OTT) service of other Internet companies) for different users (for example, for each UE, that is, different samples) in different cities of the 5th generation (5th Generation, 5G) communication system. Through combination of same data characteristics of different samples of participants, the horizontal federated learning increases the number of training samples, so as to obtain a better model.

As shown in FIG. 2, a server A is a coordinator (coordinator), and is responsible for sending information such as tasks and models of federated learning to other clients (clients) and members, and collecting information such as models, parameters, gradients, and change rates fed back by clients, updating an initial model, and then distributing an updated model. FIG. 2 is a schematic diagram of horizontal federated learning; where
(1) sending encrypted gradients (Sending encrypted gradients);
(2) secure aggregation (Secure aggregation);
(3) sending back model updates (Sending back model updates); and
(4) updating models (Updating models).

### 2. Artificial Intelligence (Artificial Intelligence, AI) and AI model:

Artificial intelligence is currently widely used in various fields. AI models are implemented in a variety of algorithm manners, for example, neural network, decision tree, support vector machine, or Bayesian classifier. The following uses a neural network as an example for illustration, which, however, does not constitute any limitation on a specific type of the AI module.

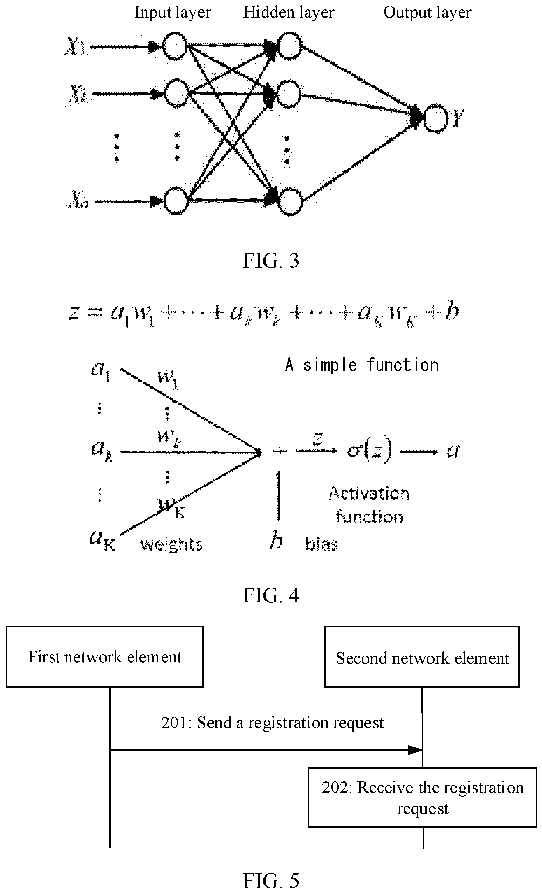

As shown in FIG. 3, FIG. 3 is a schematic diagram of a neural network. X1, X2, ... Xn are input values, Y is an output result, and Os represent neurons for operation, and results continue to be transmitted to a next layer. The input layer, hidden layer and output layer composed of these neurons are one neural network. The number of hidden layers and the number of neurons in each layer are a "network structure" of the neural network.

The neural network includes neurons, and a schematic diagram of neurons is shown in FIG. 4. a1, a2 ,... aK (that is, X1...Xn described above) are inputs, w is a weight (a multiplicative coefficient), b is a bias (additive coefficient), σ(z) is an activation function, and z is an output value. Common activation functions include Sigmoid, tanh, ReLU (Rectified Linear Unit, linear rectifier function, corrected linear unit), and so on. Parameter information and algorithms used for all neurons are combined to form "parameter information" of the whole network, which is also an important part of an AI model file.

During actual use, one AI model refers to one file containing elements such as the network structure and the parameter information. A trained AI model can be directly reused by its framework platform without repeated construction or learning, and can directly perform intelligentized functions such as judgment and identification.

3. The network data analytics function (Network Data Analytics Function, NWDAF) may be divided into two parts, NWDAF(AnLF) and NWDAF(MTLF). The former is responsible for an analytics logical function (Analytics Logical Function, AnLF) and the latter is responsible for a model training logical function (Model Training Logical Function, MTLF).

The following describes in detail a network element registration method and a model determining method provided in the embodiments of this application by using some embodiments and application scenarios thereof with reference to the accompanying drawings.

There are a plurality of NWDAF-MTLFs in the 5G network, such as NWDAF-MTLF(coordinator), NWDAF-MTLF1, and NWDAF-MTLF2, where
1) The NWDAF-MTLF (server a, coordinator) is responsible for data analysis of Jiangsu province, but can't own data of Jiangsu province (because the data are distributed and stored in various cities in Jiangsu).
2) The NWDAF-MTLF1 (Database B1, participant 1) is capable of collecting data of Suzhou region and training an AI model locally in Suzhou.
3) The NWDAF-MTLF2 (Database B2, participant 2) is capable of collecting data of Xuzhou region and training an AI model locally in Suzhou.

Therefore, to obtain the AI Model trained based on the data of Jiangsu province, horizontal federated learning needs to be used, that is, the NWDAF-MTLF0 is not required to obtain the data of Jiangsu province.

Therefore, the process and details of how to perform federated reasoning based on the model obtained through federated learning in a communication network are still unclear, for example, which network elements participate in federated reasoning, how to exchange information in the process, and what necessary information to be exchanged.

The existing network element registration and discovery technology has only requirements for identifiers, services, and partial capability information of network elements; however, registration and discovery of its federated learning capability is temporarily beyond a scope of the standard.

In this embodiment of this application, devices capable of participating in federated learning in different domains such as an NWDAF network element, a base station, and UE, need to initiate a registration procedure to a network element responsible for capability repository, such as an NRF, to indicate that it has capability information for participating in federated learning. When a federated learning initiator (such as an MTRL network element) initiates federated learning training, the federated learning initiator requests information from a network element such as an NRF, so as to discover an appropriate federated learning client (such as an NWDAF network element). After the federated learning training procedure ends, the federated learning initiator, namely, the MTLF network element, sends a model and a federated learning result to an AnLF network element, and may also indicate information of participants participating in federated learning.

Specifically, in one solution, a network element such as the NWDAF can register federated learning capability information with the NRF network element through a registration request, so as to implement registration of the network element such as the NWDAF with the NRF network element, so that other network elements can discover a network element capable of federated learning training through the NRF network element. This resolves the problem of how the network element such as the NWDAF can register the federated learning capability information with the NRF network element and can be discovered by other network elements.

In another solution, the NRF network element may receive the registration request sent by the network element such as the NWDAF to register the federated learning capability information of the network element such as the NWDAF with the NRF network element, so as to implement registration of the network element such as the NWDAF with the NRF network element, so that other network elements can discover a network element capable of federated learning training through the NRF network element. This resolves the problem of how the network element such as the NWDAF can register the federated learning capability information to the NRF network element and can be discovered by other network elements.

In still another solution, the MTRL network element can search, through a discovery request, the NRF network element for a target network element capable of federated learning training. The discovery request includes first information; therefore, the MTRL network element can discover the target network element matching the first information, so as to perform federated learning training along with the discovered target network element capable of federated learning training.

An embodiment of this application provides a network element registration method, and FIG. 5 is a flowchart of a network element registration method according to an embodiment of this application. As shown in FIG. 5, the network element registration method provided in this embodiment of this application may include the following steps 201 and 202.

Step 201: A first network element sends a registration request to a second network element.

In this embodiment of this application, the registration request is used to request registration of federated learning capability information of the first network element with the second network element.

Step 202: The second network element receives the registration request sent by the first network element.

In this embodiment of this application, the federated learning capability information of the first network element includes at least one of the following: type information of federated learning training supported by the first network element, time information of federated learning training supported by the first network element, and metadata information possessed by the first network element.

Optionally, in this embodiment of this application, the first network element may be an NWDAF network element or an NWDAF containing MTLF network element; and the second network element may be a network element responsible for capability repository, where the network element may be an NRF network element, a UDM network element, or a data collection application function (Data Collection Application Function, DCAF) network element.

Optionally, in this embodiment of this application, the first network element may send a registration request Nnrf_NFManagement_NFRegister Register to the second network element to request registration of the first network element with the second network element.

It should be noted that the type information of federated learning training supported by the first network element is used to indicate an AI model training algorithm type supported by the first network element.

Optionally, in this embodiment of this application, the type information of federated learning training supported by the first network element includes at least one of the following: indication information of whether the first network element supports federated learning training, a horizontal federated learning training type, a vertical federated learning training type, a federated learning server capability, and a federated learning client capability.

It should be noted that the foregoing federated learning server (server) capability is used to indicate whether the first network element has a federated learning server capability or whether the first network element supports acting as a federated learning server.

Optionally, in this embodiment of this application, the first network element may serve as a federated learning server, and has a capability of aggregating local model training information provided by federated learning clients to generate a global model (Aggregate model), or a capability of coordinating a federated learning (Coordinate federated learning) process.

It should be noted that the foregoing federated learning client (clients) capability is used to indicate whether the first network element has a federated learning client capability or whether the first network element supports acting as a federated learning client.

Optionally, in this embodiment of this application, the first network element may serve as a federated learning client, and has a capability of participating in federated learning, and has a capability of training local models and providing local model training information.

It should be noted that the time information of federated learning training supported by the first network element is used to indicate a time of federated learning training supported by the first network element, and the federated learning training can perform well during this time period, for example, from 10:00 pm to 6:00 am the next day.

It should be noted that the metadata information possessed by the first network element is used to indicate data information that can be covered, obtained, and provided by the first network element.

Optionally, in this embodiment of this application, the metadata information possessed by the first network element includes at least one of the following: an input data type, an output data type, a data amount, and a data range.

It should be noted that the input data type is an input data type of federated learning training, and the output data type is an output data type of federated learning training.

It should be noted that the input data type is used to indicate a data type that can be collected by the first network element for the model training process as input data, or a data type that can be obtained by the first network element.

Optionally, in this embodiment of this application, the data type refers to whether data in an area has obvious characteristics, for example, being gathered in the morning and being scattered at night.

Optionally, in this embodiment of this application, the data type may be a data category, such as location information of UE, time information of UE, load information of a network element, network status information, or resource information of a network element.

Optionally, in this embodiment of this application, the data range is a service range of the first network element.

Optionally, in this embodiment of this application, the data range includes at least one of the following: a service area of the first network element, an area in which the first network element is able to collect data, and an object from which the first network element is able to collect data.

Optionally, in this embodiment of this application, data that can be collected by the first network element includes metadata information and training data for model training.

Optionally, in this embodiment of this application, the area in which the first network element is able to collect data may be any one of the following: a service area of the first network element, a sub-area range in the service area of the first network element, and a finer-grained object for collectable data (for example, one UE list).

Optionally, in this embodiment of this application, the object for the collectable data of the first network element may include one or more specific network elements or one or more UEs.

Optionally, in this embodiment of this application, the registration request further includes at least one of the following: identification information of the first network element, analytics ID information supported by the first network element, information about a model filter supported by the first network element, and information about a network element type of the first network element, where the network element type includes a federated learning server network element type and/or a federated learning client network element type.

Optionally, in this embodiment of this application, the analytics ID information supported by the first network element may be UE mobility (UE mobility) information.

Optionally, in this embodiment of this application, the analytics ID information corresponds to the type information of the federated learning training.

Optionally, in this embodiment of this application, the analytics ID information corresponds to the federated learning capability information of the first network element.

Optionally, in this embodiment of this application, the federated learning capability information of the first network element corresponds to the analytics ID information, for example, the federated learning capability information of the first network element may correspond to a specific data analysis identifier, which means that the first network element has a federated learning capability for tasks with the data analysis identifier.

Optionally, in this embodiment of this application, there is a mapping relationship between the analytics ID information and the federated learning capability information of the first network element, where the mapping relationship may be one-to-one, many-to-one, or one-to-many. When the mapping relationship is one-to-one, the federated learning capability information of the first network element is correspondingly different for different analytics ID information.

For example, the first network element supports 10 pieces of analytics ID information, where data analysis identifiers 1 to 3 correspond to supporting horizontal federated learning training, data analysis identifiers 4 to 6 correspond to supporting vertical federated learning training, and data analysis identifiers 7 to 10 correspond to not supporting federated learning training.

Optionally, in this embodiment of this application, the identification information of the first network element may be any one of the following: fully qualified domain name (Fully Qualified Domain Name, FQDN) information and IP address information.

Optionally, in this embodiment of this application, the fully qualified domain name information is used to indicate a location of the first network element and connect to the first network element.

It should be noted that the model filter information (Model filter information) may also be referred to as model valid-range information, where the model valid-range information is used to indicate a valid range of a model generated through training by the first network element.

Optionally, in this embodiment of this application, the model valid-range information includes an applicable slice of the model, an applicable external data network name (Data Network Name, DNN) of the model, an applicable area of the model, an applicable time of the model, and so on.

Optionally, in this embodiment of this application, the applicable time of the model may be a large time range, for example, within one year; or may be a periodic time, such as 9:00-10:00 every day.

Optionally, in this embodiment of this application, the information about the model filter supported by the first network element includes model filter information corresponding to the model generated by the first network element through federated learning.

Optionally, in this embodiment of this application, the federated learning capability information of the first network element further includes at least one of the following:
information about an algorithm on which federated learning training of the first network element is based;
information about a model accuracy reachable by federated learning training of the first network element;
speed information of federated learning training of the first network element;
information about a model description manner supported by the first network element;
information about model sharability supported by the first network element;
manufacturer information of the first network element; and
information about the quantity of federated learning models supported by the first network element.

It should be noted that the information about an algorithm on which federated learning training of the first network element is based is a specific algorithm used for model training, such as linear regression and neural network.

It should be noted that the information about a model accuracy reachable by federated learning training of the first network element is used to indicate an accuracy of an output result of the model.

It should be noted that the speed information of federated learning training of the first network element includes information about a duration required for a model obtained based on federated learning training by the first network element to reach a target accuracy of the model.

It should be noted that the information about the model description manner supported by the first network element is used to indicate that the first network element supports expressing a model based on a model description manner corresponding to the information about the model description manner.

Optionally, in this embodiment of this application, the information about the model description manner may also be referred to as model description manner requirement information or model description manner expectation information.

Optionally, in this embodiment of this application, the model description information may be a model expression language represented by open neural network exchange (Open Neural Network Exchange, ONNX), or a model framework represented by TensorFlow, Pytorch, or the like.

It should be noted that the information about model sharability supported by the first network element is used to indicate that the first network element supports a shared model, where sharability means being interoperable, or sharability means being mutually understandable, and sharability means being operable.

Optionally, in this embodiment of this application, the information about model sharability may also be referred to as model sharability requirement information or model sharability expectation information.

Specifically, when the information about model sharability supported by the first network element includes one or more pieces of manufacturer information, other network elements belonging to the manufacturer information can interact with the first network element, for example, to obtain a model trained by the first network element, model information, and the like.

Specifically, when the information about model sharability supported by the first network element includes one or more pieces of model information, other network elements can interact with a model trained by the first network element and corresponding to the model information, for example, to obtain a model trained by the first network element, model information, and the like.

It should be noted that the information about model sharability can also be based on the granularity of data analysis task, that is, each type of data analysis task has different sharability information (different manufacturer information, model information, and so on).

It should be noted that the manufacturer information of the first network element is used to indicate a manufacturer corresponding to the first network element.

It should be noted that the manufacturer information of the first network element is used for determining by the second network element subsequently whether a model generated by the first network element based on federated learning training can be shared with other network elements.

For example, if manufacturer information of another network element is the same as the manufacturer information of the first network element, the another network element can share a model that is generated by the first network element based on federated learning training.

Optionally, in this embodiment of this application, the manufacturer information of the first network element can be used for selecting by the second network element a network element that can participate in the federated learning training.

It should be noted that the information about the quantity of federated learning models supported by the first network element is used to indicate information about the quantity of federated learning models supported by the first network element for each data analysis identifier, such as the maximum number and the minimum number.

Optionally, in this embodiment of this application, the registration request further includes at least one of the following: type information of the first network element and a service name supported by the first network element.

For example, the first network element is an NWDAF network element, and the service name supported by the NWDAF network element is Nnwdaf_AnalyticsInfo_Request.

Optionally, in this embodiment of this application, the type information of the first network element is used to indicate what type of network element is registered this time, for example, the type information of the first network element is the type of NWDAF network element, indicating that the network element registered this time is an NWDAF network element.

Optionally, in this embodiment of this application, after the foregoing step 202, this embodiment of this application further includes the following steps 203 and 204.

Step 203: The second network element sends a registration response to the first network element.

In this embodiment of this application, the registration response is used to indicate that capability registration of the first device is successful.

Optionally, in this embodiment of this application, the second network element may send a Nnrf_NFManagement_NFRegister response registration response to the second network element to inform the first network element that the registration is successful.

Step 204: The first network element receives the registration response sent by the second network element.

This embodiment of this application provides a network element registration method. The first network element can register the federated learning capability information of the first network element with the second network element through a registration request, so as to implement registration of the first network element with the second network element, thereby enabling other network elements to discover, through the second network element, the first network element capable of federated learning training. This resolves the problem of how the first network element registers the federated learning capability information with the second network element and can be discovered by other network elements.

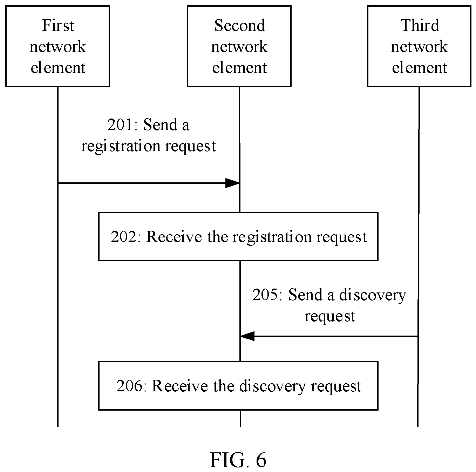

Optionally, in this embodiment of this application, with reference to FIG. 5, as shown in FIG. 6, the network element registration method provided in this embodiment of this application further includes the following steps 205 and 206 after the foregoing step 202.

Step 205: A third network element sends a discovery request to the second network element.

In this embodiment of this application, the discovery request is used to request to discover a network element capable of federated learning training.

Step 206: The second network element receives the discovery request sent by the third network element.

In this embodiment of this application, the discovery request includes first information, where the first information includes at least one of the following: analytics ID information corresponding to a target task, type information of federated learning training corresponding to the target task, time information of federated learning training corresponding to the target task, metadata information of a network element of federated learning training corresponding to the target task, network element type requirement information, and network element quantity requirement information. The network element type requirement information is used to indicate a network element type corresponding to a to-be-discovered network element capable of federated learning training, where the network element type includes a federated learning server network element type and/or a federated learning client network element type; and the network element quantity requirement information is used to indicate a requirement on the quantity of to-be-discovered network elements capable of federated learning training.

In this embodiment of this application, the third network element is a model training logical function (MTLF, Model Training Logical Function) network element, that is, a model training network element, which can be understood as a network element that initiates federated learning.

Optionally, in this embodiment of this application, the third network element may send an Nnrf_NFDiscovery_Request discovery request to the second network element to request to discover a network element capable of federated learning training.

Optionally, in this embodiment of this application, the third network element sends a discovery request to the second network element in a case that the third network element does not support/conduct independent training to generate model information corresponding to the target task.

Optionally, in this embodiment of this application, in a case that the third network element does not support/conduct independent training to generate the model information corresponding to the target task may be a case that a metadata amount of the third network element is insufficient, or a case that an accuracy of a trained model of the third network element does not meet a standard.

Optionally, in this embodiment of this application, the third network element may be a network element with a federated learning server capability, and the third network element may discover a network element with a federated learning client capability to perform federated learning training.

Optionally, in this embodiment of this application, the third network element may be a network element with a federated learning client capability, and the third network element may discover a network element with a federated learning server capability to request the network element with the federated learning server capability to organize federated learning training.

It should be noted that the type information of federated learning training corresponding to the target task is used to indicate obtaining network element information of a network element supporting the type of federated learning training corresponding to the target task. For example, if the third network element determines that federated learning training is required, it indicates obtaining network element information of a network element supporting federated learning training, where the network element information is used to indicate that the network element supports federated learning training; or, if the third network element determines that horizontal federated learning training is required, it indicates obtaining network element information of a network element supporting the horizontal federated learning training, where the network element information is used to indicate that the network element supports the horizontal federated learning training.

It should be noted that the time information of federated learning training corresponding to the target task is used to indicate time information that the third network element plans to perform federated learning training, so as to discover a network element that supports federated learning training within the time range, where the time information is a future time period, for example, from 10:00 pm to 6:00 am the next day.

It should be noted that the metadata information possessed by the network element of federated learning training corresponding to the target task is used to indicate data information that can be covered, obtained, and provided by a target network element required.

Optionally, in this embodiment of this application, the metadata information possessed by the network element of federated learning training corresponding to the target task includes at least one of the following: an input data type, an output data type, a data amount, and a data range.

Optionally, in this embodiment of this application, the first information further includes second information, and the second information is used to request to obtain a plurality of to-be-discovered network elements capable of federated learning training.

Optionally, in this embodiment of this application, the network element quantity requirement information may include at least one of the following: minimum quantity requirement information, suggested quantity information, and maximum quantity requirement information.

Optionally, in this embodiment of this application, the first information further includes at least one of the following:
information about an algorithm on which federated learning training corresponding to the target task is based;
information about a model accuracy reachable by federated learning training corresponding to the target task;
speed information of the federated learning training corresponding to the target task;
information about a model description manner supported by a network element of federated learning training corresponding to the target task;
information about model sharability supported by a network element of federated learning training corresponding to the target task;
manufacturer information of a network element of federated learning training corresponding to the target task; and
information about the quantity of federated learning models supported by a network element of federated learning training corresponding to the target task.

It should be noted that the information about an algorithm on which federated learning training corresponding to the target task is based is used to indicate a specific algorithm used for model training, such as linear regression and neural network.

It should be noted that the information about a model accuracy reachable by federated learning training corresponding to the target task is used to indicate accuracy to be reached for an output result of the model.

It should be noted that the speed information of the federated learning training corresponding to the target task is used to indicate information about a duration required for a model obtained based on federated learning training by the network element to reach a target accuracy of the model.

It should be noted that the information about a model description manner supported by a network element of federated learning training corresponding to the target task is used to indicate that the network element needs to support expressing a model based on a model description manner corresponding to the information about the model description manner.

It should be noted that the information about model sharability supported by a network element of federated learning training corresponding to the target task is used to indicate that the network element needs to support model sharing.

It should be noted that the manufacturer information of a network element of federated learning training corresponding to the target task is used to indicate a manufacturer corresponding to the network element.

It should be noted that the information about the quantity of federated learning models supported by a network element of federated learning training corresponding to the target task is used to indicate the quantity of models based on federated learning training that the network element needs to support for each data analysis identifier.

Optionally, in this embodiment of this application, the first information further includes at least one of the following: service information of a network element of federated learning training corresponding to the target task, type information of a network element of federated learning training corresponding to the target task, and information about area of interest.

Optionally, in this embodiment of this application, if the target service is a request for analytics ID information, the service information of the network element of federated learning training corresponding to the target task may be Nnwdaf_AnalyticsInfo_Request.

Optionally, in this embodiment of this application, if the network element of the target service is an NWDAF network element, the type information of the network element of federated learning training corresponding to the target task may be type information of the NWDAF network element.

Optionally, in this embodiment of this application, the information about the area of interest may be TA(s), cell(s), or other forms of expression, and is used to indicate requesting discovery of a network element participating in federated learning training in the area of interest.

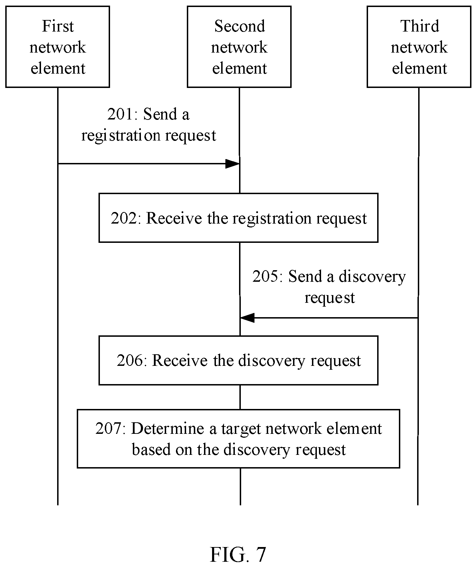

Optionally, in this embodiment of this application, with reference to FIG. 6, as shown in FIG. 7, the network element registration method provided in this embodiment of this application further includes the following step 207 after the foregoing step 206.

Step 207: The second network element determines a target network element based on the discovery request.

In this embodiment of this application, the federated learning capability information of the target network element matches the first information.

It can be understood that the second network element determines a network element whose federated learning capability information matches the first information as the target network element (one or more network elements).

Optionally, in this embodiment of this application, the foregoing step 207 may be specifically implemented by step 207a to step 207f described below.

Step 207a: The second network element determines the target network element based on the analytics ID information corresponding to the target task.

In this embodiment of this application, the target network element supports federated learning training corresponding to the analytics ID information.

It can be understood that the second network element determines a network element supporting federated learning training corresponding to the analytics ID information as the target network element.

Step 207b: The second network element determines the target network element based on the type of federated learning training corresponding to the target task.

In this embodiment of this application, the target network element supports the type of federated learning training corresponding to the target task.

It can be understood that the second network element determines a network element supporting the type of federated learning training corresponding to the target task as the target network element.

Optionally, in this embodiment of this application, the second network element may determine a network element supporting federated learning training corresponding to the target task as the target network element.

Optionally, in this embodiment of this application, the second network element may determine a network element supporting a federated learning server capability corresponding to the target task as the target network element.

Optionally, in this embodiment of this application, the second network element may determine a network element supporting a federated learning client capability corresponding to the target task as the target network element.

Step 207c: The second network element determines the target network element based on the time information of federated learning training corresponding to the target task.

In this embodiment of this application, the target network element supports federated learning training performed at a time corresponding to target time information, where the target time information is the time information of federated learning training corresponding to the target task.

It can be understood that the second network element determines a network element supporting federated learning training performed at a time corresponding to the target time information as the target network element.

Step 207d: The second network element determines the target network element based on the metadata information possessed by the network element of federated learning training corresponding to the target task.

In this embodiment of this application, the target network element supports the metadata information possessed by the network element of federated learning training corresponding to the target task.

It can be understood that the second network element determines a network element supporting federated learning training corresponding to the target task as the target network element.

Step 207e: The second network element determines the target network element based on the network element quantity requirement information.

In this embodiment of this application, the quantity of target network elements meets the network element quantity requirement information.

It can be understood that when the quantity of network elements capable of federated learning training and discovered by the second network element meets the quantity of network elements indicated by the network element quantity requirement information, network elements that meet the quantity requirement may be determined as the target network element.

Step 207f: The second network element determines the target network element based on the network element type requirement information.

In this embodiment of this application, the network element type of the target network element meets the network element type requirement information.

It can be understood that the second network element determines a network element that meets the network element type requirement information as the target network element.

Optionally, in this embodiment of this application, the second network element determines the target network element based on the information about an algorithm on which the federated learning training corresponding to the target task is based.

It can be understood that the second network element determines a network element supporting an algorithm on which the federated learning training corresponding to the target task is based as the target network element.

Optionally, in this embodiment of this application, the second network element determines the target network element based on the information about a model accuracy reachable by federated learning training corresponding to the target task.

It can be understood that the second network element determines a network element supporting a model accuracy reachable by federated learning training corresponding to the target task as the target network element.

Optionally, in this embodiment of this application, the second network element determines the target network element based on the speed information of federated learning training corresponding to the target task.

It can be understood that the second network element determines a network element supporting a speed of federated learning training corresponding to the target task as the target network element.

Optionally, in this embodiment of this application, the second network element determines the target network element based on the information about a model description manner supported by a network element of federated learning training corresponding to the target task.

It can be understood that the second network element determines a network element supporting a model description manner corresponding to the model description manner information (that is, the model description manner information supported by the network element of federated learning training corresponding to the target task) as the target network element.

Optionally, in this embodiment of this application, the second network element determines the target network element based on the information about model sharability supported by a network element of federated learning training corresponding to the target task.

It can be understood that the second network element determines a network element supporting model sharing as the target network element.

Optionally, in this embodiment of this application, the second network element determines the target network element based on the manufacturer information of federated learning training corresponding to the target task.

It can be understood that the second network element determines a network element corresponding to the manufacturer information as the target network element.

Optionally, in this embodiment of this application, the second network element determines the target network element based on the information about the quantity of federated learning models supported by a network element of federated learning training corresponding to the target task.

It can be understood that the second network element determines a network element that supports the information about the quantity of federated learning models (that is, the information about the quantity of federated learning models supported by the network element of federated learning training corresponding to the target task) as the target network element.

Optionally, in this embodiment of this application, in a case that the second network element determines the target network element based on the network element quantity requirement information, the network element registration method provided in this embodiment of this application further includes the following step A1.

Step A1: In a case that the quantity of network elements capable of federated learning training and discovered by the second network element is less than the quantity of network elements indicated by the network element quantity requirement information, the second network element determines the discovered network element capable of federated learning training as the target network element.

It can be understood that the discovered network element capable of federated learning training is a network element meeting other requirements of the third network element (such as network element type or time of federated learning training) but not meeting the network element quantity requirement information.

Optionally, in this embodiment of this application, in a case that the quantity of network elements capable of federated learning training and discovered by the second network element is equal to the quantity of network elements indicated by the network element quantity requirement information, the second network element determines the discovered network element capable of federated learning training as the target network element.

It can be understood that the discovered network element capable of federated learning training is a network element that meets the requirement information of the third network element.

Optionally, in this embodiment of this application, in a case that the quantity of network elements capable of federated learning training and discovered by the second network element is greater than the quantity of network elements indicated by the network element quantity requirement information, the second network element determines part of the discovered network elements capable of federated learning training as the target network element.

Optionally, in this embodiment of this application, the second network element may rank, according to a preset internal logic, all the discovered network elements capable of federated learning training, and then selects, based on a ranking result, network elements that meet the network element quantity requirement information as the target network elements.

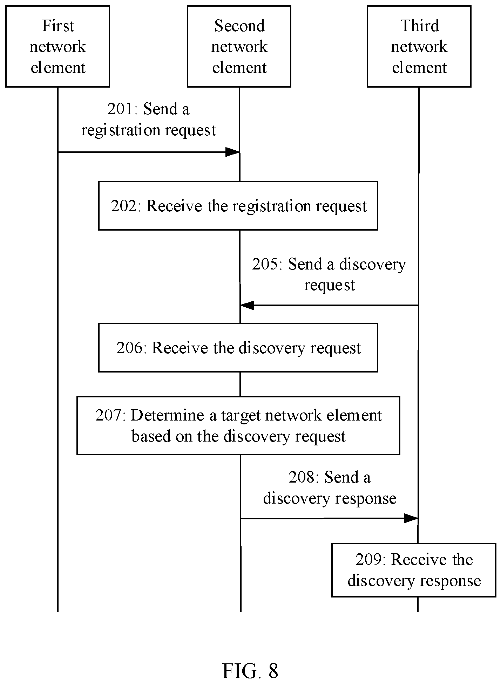

Optionally, in this embodiment of this application, with reference to FIG. 7, as shown in FIG. 8, the network element registration method provided in this embodiment of this application further includes the following steps 208 and 209 after the foregoing step 207.

Step 208: The second network element sends a discovery response to the third network element.

In this embodiment of this application, the discovery response includes identification information or address information of the target network element.

Step 209: The third network element receives the discovery response sent by the second network element.

Optionally, in this embodiment of this application, the identification information of the target network element may be any one of the following: FQDN information and IP address information.

Optionally, in this embodiment of this application, the second network element may send an Nnrf_NFDiscovery _Request discovery response to the third network element to send network element information of a network element capable of federated learning training.

Optionally, in this embodiment of this application, the discovery response further includes second information, and the second information includes at least one of the following: type information of federated learning training supported by the target network element, time information of federated learning training supported by the target network element, and metadata information possessed by the target network element.

In this embodiment of this application, the type information of federated learning training supported by the target network element is used to indicate an Al model training algorithm type supported by the target network element.

In this embodiment of this application, the time information of federated learning training supported by the target network element is used to indicate a time of federated learning training supported by the target network element, and the federated learning training can perform well during this time period, for example, from 10:00 pm to 6:00 am the next day.

In this embodiment of this application, the metadata information possessed by the target network element is used to indicate data information that can be covered, obtained, and provided by the target network element.

Optionally, in this embodiment of this application, the metadata information possessed by the target network element includes at least one of the following: an input data type, an output data type, a data amount, and a data range.

Optionally, in this embodiment of this application, the discovery response further includes the type information of the target network element.

Optionally, in this embodiment of this application, the type information of the target network element is used to indicate the target network element being what type of network element, for example, the type information of the target network element is the type of NWDAF network element, indicating that the target network element is an NWDAF network element.

Optionally, in this embodiment of this application, in a case that the quantity of network elements capable of federated learning training and discovered by the second network element is less than the quantity of network elements indicated by the network element quantity requirement information, the discovery response further includes third information, where the third information includes at least one of the following:
first indication information, where the first indication information is used to indicate that the quantity of target network elements is less than the quantity of network elements indicated by the network element quantity requirement information;
information about the quantity of target network elements; and
fourth information, where the fourth information is used for suggesting the third network element to postpone discovery of a network element capable of federated learning training, and the fourth information includes time information for postponing discovery of a network element capable of federated learning training.

Optionally, in this embodiment of this application, the time information may be a specific time.

For example, the fourth information may include time information "half an hour", so that upon receiving the third information, the third network element may search, after half an hour based on the time information, for a network element capable of federated learning training.

It can be understood that when the quantity of network elements capable of federated learning training and discovered by the second network element is less than the quantity of network elements indicated by the network element quantity requirement information, on the one hand, the second network element may determine the discovered network element capable of federated learning training as the target network element, and includes identification information or address information of the target network element in the discovery response; on the other hand, the second network element may include the third information in the discovery response to inform the third network element of at least one of the following: the quantity of target network elements does not meet a quantity indicated by the network element quantity requirement information, information about the quantity of target network elements, and suggesting the third network element to postpone discovery of a network element capable of federated learning training.

Optionally, in this embodiment of this application, when the quantity of network elements capable of federated learning training and discovered by the second network element is equal to the quantity of network elements indicated by the network element quantity requirement information, the discovery response may further include fifth information, where the fifth information is used to indicate that the quantity of target network elements meets the quantity of network elements indicated by the network element quantity requirement information.

It can be understood that when the quantity of network elements capable of federated learning training and discovered by the second network element is equal to the quantity of network elements indicated by the network element quantity requirement information, on the one hand, the second network element may determine the discovered network element capable of federated learning training as the target network element, and includes identification information or address information of the target network element in the discovery response; on the other hand, the second network element may include fifth information in the discovery response to inform the third network element that the quantity of target network elements meets the quantity indicated by the network element quantity requirement information.

Optionally, in this embodiment of this application, in a case that the quantity of network elements capable of federated learning training and discovered by the second network element is greater than the quantity of network elements indicated by the network element quantity requirement information, the discovery response further includes sixth information, where the sixth information includes at least one of the following:
third indication information, where the third indication information is used to indicate that the quantity of discovered network elements capable of federated learning training is greater than the quantity of network elements indicated by the network element quantity requirement information;
related information of the discovered network elements capable of federated learning training; and
quantity information of the discovered network elements capable of federated learning training.

It can be understood that when the quantity of network elements capable of federated learning training and discovered by the second network element is greater than the quantity of network elements indicated by the network element quantity requirement information, on the one hand, the second network element may determine part of network elements that meet the network element quantity requirement information from the network elements capable of federated learning training as the target network element, and includes identification information or address information of the target network element in the discovery response; on the other hand, the second network element may include sixth information in the discovery response to inform the third network element of at least one of the following: related information of the network elements capable of federated learning training and discovered by the second network element, quantity information of the network elements capable of federated learning training and discovered by the second network element, and the quantity of network elements capable of federated learning training and discovered by the second network element exceeds the quantity indicated by the network element quantity requirement information.

Optionally, in this embodiment of this application, after receiving the third information, the third network element may obtain the model information corresponding to the target task through federated learning training along with the target network element; or may not perform federated learning training along with the target network element determined by the second network element, that is, to stop federated learning training; or based on the fourth information or internal logic, postpone to reinitiate a discovery request to search again for a network element capable of federated learning training to perform federated learning.

Optionally, in this embodiment of this application, after receiving the sixth information, the third network element may select all or part of the target network elements for federated learning training, so as to obtain the model information corresponding to the target task; or may select, based on internal logic, part of network elements from all the network elements capable of federated learning training and discovered by the second network element to perform federated learning training, so as to obtain the model information corresponding to the target task.

Optionally, in this embodiment of this application, after the foregoing step 209, the network element registration method provided in this embodiment of this application may further include the following step 209a.

Step 209a: The third network element selects all or part of the target network elements for federated learning training.

Optionally, in this embodiment of this application, all or part of the network elements can be used as federated learning training clients or federated learning training servers. Specifically, the third network element may select, based on the network element type and the network element type requirement information, a federated learning training client or a federated learning training server from the target network elements.

Optionally, in this embodiment of this application, the third network element may select all or part of the target network elements for federated learning training based on the federated learning capability of the target network element, the registration information of the target network element, or the internal logic of the third network element.

This embodiment of this application provides a network element registration method. The second network element may receive the discovery request sent by the third network element to determine the target network element capable of federated learning training based on the discovery request, and then may send the discovery response to the third network element, so that the third network element determines the target network element capable of federated learning training, so as to perform federated learning training along with the target network element capable of federated learning training to obtain model information corresponding to the target task.

It should be noted that, for the network element registration method provided by the embodiments of this application, the execution body may be a network element registration apparatus, or a control module for executing the network element registration method in the network element registration apparatus.

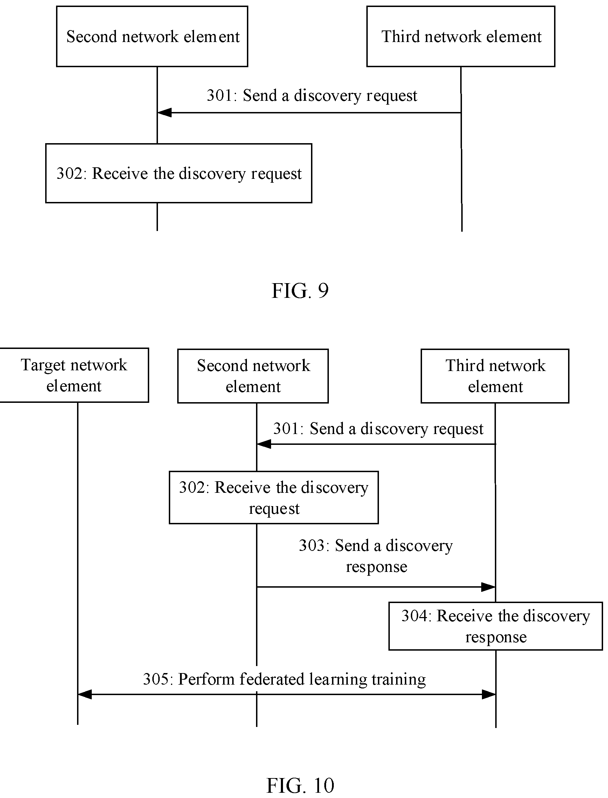

An embodiment of this application provides a model determining method, and FIG. 9 is a flowchart of a model determining method according to an embodiment of this application. As shown in FIG. 9, the model determining method provided in this embodiment of this application may include the following steps 301 and 302.

Step 301: A third network element sends a discovery request to a second network element.

In this embodiment of this application, the discovery request is used to request to discover a network element capable of federated learning training.

Step 302: The second network element receives the discovery request sent by the third network element.

Optionally, in this embodiment of this application, the third network element sends a discovery request to the second network element in a case that the third network element does not support/conduct independent training to generate model information corresponding to the target task.

Optionally, in this embodiment of this application, in a case that the third network element does not support/conduct independent training to generate the model information corresponding to the target task may be a case that a metadata amount of the third network element is insufficient, or a case that an accuracy of a trained model of the third network element does not meet a standard.

In this embodiment of this application, the third network element is a model training logical function (MTLF, Model Training Logical Function) network element, that is, a model training network element, which can be understood as a network element that initiates federated learning.

Optionally, in this embodiment of this application, the third network element may send an Nnrf_NFDiscovery _Request discovery request to the second network element to request to discover a network element capable of federated learning training.

In this embodiment of this application, the discovery request includes first information, where the first information includes at least one of the following: analytics ID information corresponding to a target task, type information of federated learning training corresponding to the target task, time information of federated learning training corresponding to the target task, metadata information of a network element of federated learning training corresponding to the target task, network element type requirement information, and network element quantity requirement information. The network element type requirement information is used to indicate a network element type corresponding to a to-be-discovered network element capable of federated learning training, where the network element type includes a federated learning server network element type and/or a federated learning client network element type; and the network element quantity requirement information is used to indicate a requirement on the quantity of to-be-discovered network elements capable of federated learning training.

Optionally, in this embodiment of this application, the type information of federated learning training corresponding to the foregoing target task is used to indicate obtaining network element information of a network element supporting the type of federated learning training corresponding to the target task. For example, if the third network element determines that federated learning training is required, it indicates obtaining network element information of a network element supporting federated learning training, where the network element information is used to indicate that the network element supports federated learning training; or, if the third network element determines that horizontal federated learning training is required, it indicates obtaining network element information of a network element supporting the horizontal federated learning training, where the network element information is used to indicate that the network element supports the horizontal federated learning training.

Optionally, in this embodiment of this application, the time information of federated learning training corresponding to the target task is used to indicate time information that the third network element plans to perform federated learning training, so as to find a network element that supports federated learning training within the time range, where the time information is a future time period, for example, from 10:00 pm to 6:00 am the next day.

Optionally, in this embodiment of this application, the metadata information possessed by the network element of federated learning training corresponding to the target task is used to indicate data information that can be covered, obtained, and provided by a target network element required.

Optionally, in this embodiment of this application, the metadata information possessed by the network element of federated learning training corresponding to the target task includes at least one of the following: an input data type, an output data type, a data amount, and a data range.

Optionally, in this embodiment of this application, the input data type is an input data type of federated learning training, and the output data type is an output data type of federated learning training.

Optionally, in this embodiment of this application, the data type refers to whether input data and output data of federated learning training has obvious characteristics, for example, being gathered in the morning and being scattered at night.

Optionally, in this embodiment of this application, the data range is a service range of the target network element.

Optionally, in this embodiment of this application, the data range includes at least one of the following: a service area of the target network element, an area in which the target network element is able to collect data, and an object from which the target network element is able to collect data.

Optionally, in this embodiment of this application, data that can be collected by the target network element includes metadata information and training data for model training.

Optionally, in this embodiment of this application, the area in which the target network element is able to collect data may be any one of the following: a service area of the target network element, a sub-area range in the service area of the target network element, and a finer-grained object for collectable data (for example, one UE list).

Optionally, in this embodiment of this application, the first information further includes at least one of the following:
information about an algorithm on which federated learning training corresponding to the target task is based;
information about a model accuracy reachable by federated learning training corresponding to the target task;
speed information of the federated learning training corresponding to the target task;
information about a model description manner supported by a network element of federated learning training corresponding to the target task;
information about model sharability supported by a network element of federated learning training corresponding to the target task;
manufacturer information of a network element of federated learning training corresponding to the target task; and
information about the quantity of federated learning models supported by a network element of federated learning training corresponding to the target task.

Optionally, in this embodiment of this application, the information about an algorithm on which federated learning training corresponding to the target task is used to indicate a specific algorithm used for model training, such as linear regression and neural network.

Optionally, in this embodiment of this application, the information about a model accuracy reachable by federated learning training corresponding to the target task is used to indicate accuracy to be reached for an output result of the model.

Optionally, in this embodiment of this application, the speed information of the federated learning training corresponding to the target task is used to indicate information about a duration required for a model obtained based on federated learning training by the network element to reach a target accuracy of the model.

Optionally, in this embodiment of this application, the first information further includes at least one of the following: service information of a network element of federated learning training corresponding to the target task, type information of a network element of federated learning training corresponding to the target task, and information about area of interest.

Optionally, in this embodiment of this application, if the target service is a request for analytics ID information, the service information of the network element of federated learning training corresponding to the target task may be Nnwdaf_AnalyticsInfo_Request.

Optionally, in this embodiment of this application, if the network element of the target service is an NWDAF network element, the type information of the network element of federated learning training corresponding to the target task may be type information of the NWDAF network element.

Optionally, in this embodiment of this application, the information about the area of interest may be TA(s), cell(s), or other forms of expression, and is used to indicate requesting discovery of a network element participating in federated learning training in the area of interest.

This embodiment of this application provides a model determining method. The third network element may search, through a discovery request, the second network element for a network element capable of federated learning training. The discovery request includes first information; therefore, the third network element can discover the target network element matching the first information, so as to perform federated learning training along with the discovered target network element capable of federated learning training.

Optionally, in this embodiment of this application, with reference to FIG. 9, as shown in FIG. 10, the model determining method provided in this embodiment of this application further includes the following steps 303 to 305 after the foregoing step 302.

Step 303: The second network element sends a discovery response to the third network element.

In this embodiment of this application, the discovery response includes identification information or address information of the target network element, and the target network element is a network element supporting federated learning training.

Optionally, in this embodiment of this application, the identification information of the target network element may be any one of the following: FQDN information and IP address information.

Step 304: The third network element receives the discovery response sent by the second network element.

Optionally, in this embodiment of this application, the second network element may send an Nnrf_NFDiscovery_Request discovery response to the third network element to send network element information of a network element capable of federated learning training.

Optionally, in this embodiment of this application, the discovery response further includes second information, and the second information includes at least one of the following: type information of federated learning training supported by the target network element, time information of federated learning training supported by the target network element, and metadata information possessed by the target network element.

Optionally, in this embodiment of this application, the type information of federated learning training supported by the target network element is used to indicate an AI model training algorithm type supported by the target network element.

Optionally, in this embodiment of this application, the time information of federated learning training supported by the target network element is used to indicate a time of federated learning training supported by the target network element, and the federated learning training can perform well during this time period, for example, from 10:00 pm to 6:00 am the next day.

Optionally, in this embodiment of this application, the metadata information possessed by the target network element is used to indicate data information that can be covered, obtained, and provided by the target network element.

Optionally, in this embodiment of this application, the metadata information possessed by the target network element includes at least one of the following: an input data type, an output data type, a data amount, and a data range.

Optionally, in this embodiment of this application, the discovery response further includes the type information of the target network element.

Optionally, in this embodiment of this application, the type information of the target network element is used to indicate the target network element being what type of network element, for example, the type information of the target network element is the type of NWDAF network element, indicating that the target network element is an NWDAF network element.

Step 305: The third network element performs federated learning training along with the target network element to obtain model information corresponding to the target task.

Optionally, in this embodiment of this application, based on information included in the received discovery response, the third network element may determine and discover the target network element participating in federated learning training, so as to perform federated learning along with the discovered target network element.

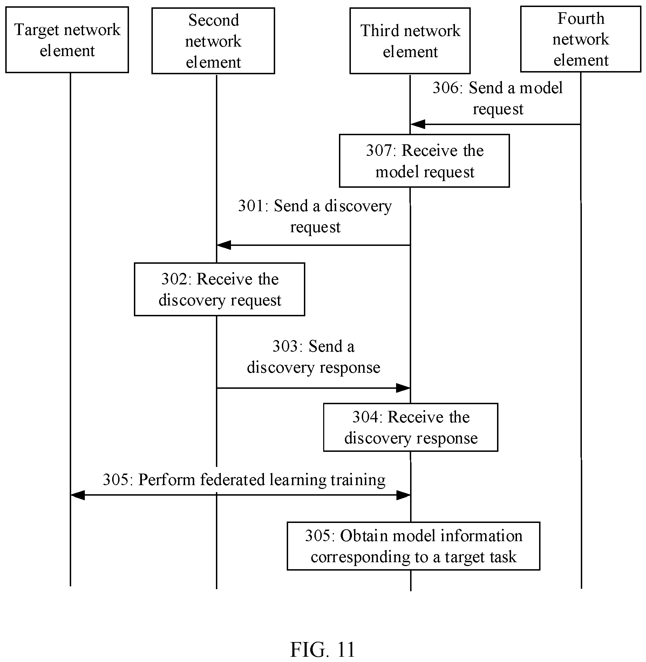

Optionally, in this embodiment of this application, with reference to FIG. 10, as shown in FIG. 11, the model determining method provided in this embodiment of this application further includes the following steps 306 and 307 before the foregoing step 301.

Step 306: A fourth network element sends a model request to the third network element.

In this embodiment of this application, the model request is used to request model information corresponding to the target task.

Step 307: The third network element receives the model request sent by the fourth network element.

Optionally, in this embodiment of this application, the fourth network element is a model reasoning network element, and the network element may be an AnLF network element, an NWDAF network element, and an NWDAF containing AnLF network element.

Optionally, in this embodiment of this application, the fourth network element may send an Nnwdaf_MLMoldelInfo_Request model request to the third network element to request the third network element to feed back the model information meeting the task.

Optionally, in this embodiment of this application, the model request includes at least one of the following: analytics ID information corresponding to the target task, and restriction information corresponding to the target task.

Optionally, in this embodiment of this application, the analytics ID information corresponding to the target task may be UE mobility (UE mobility) information.

Optionally, in this embodiment of this application, the restriction information corresponding to the target task is used to indicate a specific restriction condition of the target task, for example, information such as time and location required for restricting the target task.

Optionally, in this embodiment of this application, the model request further includes at least one of the following: indication information of the target network element and reporting restriction information.

Optionally, in this embodiment of this application, the indication information of the target network element is used to indicate the target network element of the target task, for example, in the user mobility information, identification information such as a SUPI of the target network element can be specified.

Optionally, in this embodiment of this application, the reporting restriction information is used to indicate information, a format, and the like required to be reported for the target task, for example, an arrangement manner is ascending order.

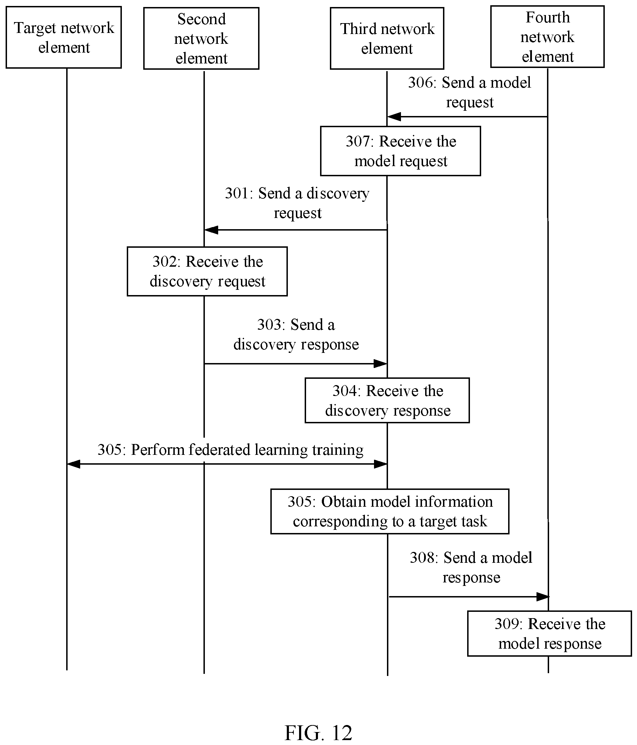

Optionally, in this embodiment of this application, with reference to FIG. 11, as shown in FIG. 12, the model determining method provided in this embodiment of this application further includes the following steps 308 and 309 after the foregoing step 305.

Step 308: The third network element sends a model response to the fourth network element.

In this embodiment of this application, the model response includes model information corresponding to the target task, and the model information is used by the fourth network element for model reasoning.

Step 309: The fourth network element receives the model response sent by the third network element.

Optionally, in this embodiment of this application, the model information corresponding to the target task includes at least one of the following: target information and information related to federated learning training.

Optionally, in this embodiment of this application, the target information includes at least one of the following: model description information corresponding to the target task, model file corresponding to the target task, and model repository address information corresponding to the target task.

Optionally, in this embodiment of this application, the model file corresponding to the target task includes at least one of the following: generating a complete network structure of the model information corresponding to the target task, and generating parameter information of the model information corresponding to the target task.

Optionally, in this embodiment of this application, the information related to federated learning training includes at least one of the following: second indication information, identification information of network elements participating in federated learning training, and capability information of network elements participating in federated learning training.

In this embodiment of this application, the second indication information is used to indicate that the model information corresponding to the target task is model information obtained through federated learning training.

Optionally, in this embodiment of this application, the identification information of the network elements participating in federated learning training may be the identification and address information of the network elements, such as fully qualified domain name information or IP address information.

Optionally, in this embodiment of this application, the third network element may send the identification information of the network elements participating in federated learning training to the fourth network element together, so that the fourth network element can perform reasoning of federated learning training subsequently.

Optionally, in this embodiment of this application, the model information corresponding to the target task further includes at least one of the following: analytics ID information corresponding to the target task, and restriction information corresponding to the target task.

Optionally, in this embodiment of this application, the restriction information corresponding to the target task includes information about area of interest or information about a target terminal. The model determining method provided in this embodiment of this application may further include the following step 401.

Step 401: In a case that the third network element is unable to obtain training data of a target task corresponding to the area of interest or the target terminal, the third network element performs federated learning training for the target task.

It should be noted that the area of interest is an area based on a requirement of the model for federated learning training or based on prediction information.

For example, the weather in a specific area tomorrow is predicted through a model.

It should be noted that the target terminal is a terminal based on a requirement of the model for federated learning training or based on prediction information.

For example, a trip of the target terminal tomorrow is predicted through the model.

Optionally, in this embodiment of this application, the restriction information corresponding to the target task includes information about area of interest or information about a target terminal. The model determining method provided in this embodiment of this application may further include the following step 402.

Step 402: The third network element determines, based on the information about area of interest or the information about the target terminal, the metadata information possessed by the network element of federated learning training corresponding to the target task.

In this embodiment of this application, the metadata information includes a data range for the network elements of federated learning training.

This embodiment of this application provides a model determining method. The third network element can receive the model request sent by the fourth network element for requesting the model information corresponding to the target task, and then the third network element may search, through the discovery request, the second network element for a network element capable of federated learning training. The discovery request includes first information; therefore, the third network element can discover the target network element matching the first information. Through federated learning training along with the discovered target network element, the model information corresponding to the target task can be obtained, thus improving a success rate of model transmission.

It should be noted that, for the model determining method provided by the embodiments of this application, the execution body may be a model determining apparatus, or a control module for executing the model determining method in the model determining apparatus.

The following describes in detail the interaction processes of the network element registration method and the model determining method provided in the embodiments of this application through specific implementations.

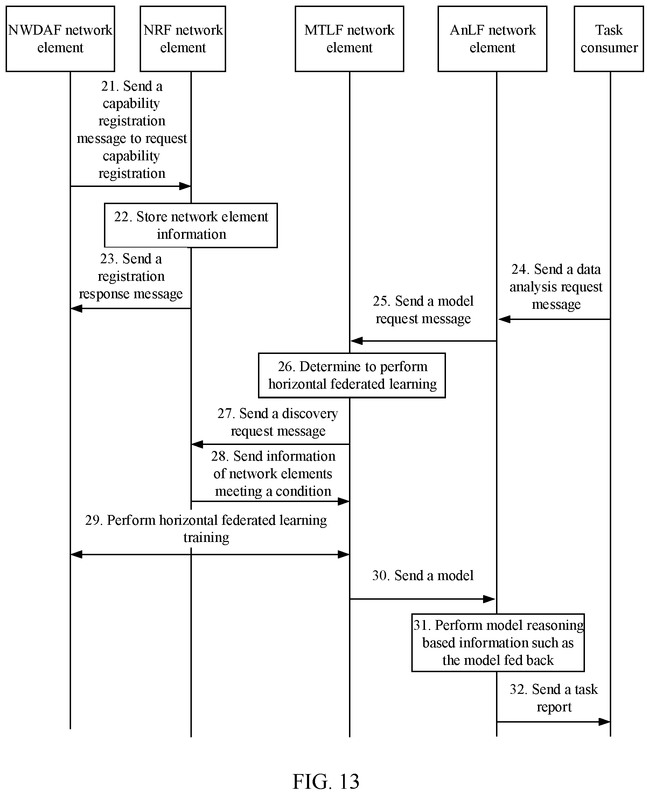

As shown in FIG. 13, the method provided in this embodiment of this application may include the following steps 21 to 32.

Step 21: Intelligent devices in different domains (for example, an NWDAF network element on the core network side, a base station, UE, or a third-party application server) send a capability registration message to a capability repository device such as an NRF (for example, the NRF network element, a UDM network element, or a DCAF network element) for capability registration.

In this embodiment of this application, the NWDAF network element can make registration through (Nnrf_NFManagement_NFRegister Register).

Step 22: The NRF network element stores information about the NWDAF network element.

Step 23: The NRF network element sends a registration response message.

In this embodiment of this application, the NRF network element can notify, through a response message (Nnrf_NFManagement_ NFRegister response), the NWDAF network element that the registration is successful.

These steps are similar to the prior art, except that:
in step 21, when sending a capability registration message to the NRF network element, the NWDAF network element also sends "supported training type information", "supported federated learning time", "metadata information Meta data", and the like, in addition to information such as its own identification information and supported analytic ID.

Necessary information for registration is as follows:
1. NF type, network element type, indicating what type of network element is registered this time, for example, in this solution, NF type = NWDAF type.
2. NF instance ID, FQDN or IP address of NF, network element instance identification information, indicating identification information of a current registered network element, for example, its FQDN information (Fully Qualified Domain Name, fully qualified domain name, used to indicate a location of this network element and connect to this network element) or IP address information (another type of identification information).
3. Names of supported NF services (if applicable), service names supported by the network element; for example, the NWDAF network element has a service named Nnwdaf_AnalyticsInfo_Request and so on.
   In addition, the network element registration information also needs to include at least one of the following:
4. Supported training type information, indicating a type of AI model training algorithm supported by the network element, such as "federated learning" or "deep learning".
5. Supported federated learning time, indicating a federated learning time supported by the network element, during which there is relatively good performance of federated learning, for example, "10:00 pm to 6:00 am the next day".
6. Metadata information Meta data, indicating data information that can be covered, obtained, and provided by the network element, including information such as data type, data characteristics, and data amount.
7. Analytics ID, data analysis ID, for example, "UE mobility" (user mobility).
8. Algorithm used in model training, a specific algorithm used for model training, such as linear regression or neural network.
9. Model accuracy reachable by model training, accuracy of a model output result.
10. Speed of model training, used to indicate a time required for reaching a specified accuracy by model training.

Step 24: A task consumer (consumer) sends a data analysis request message to a model reasoning network element AnLF (or an NWDAF or an NWDAF containing AnLF).

In this embodiment of this application, the task consumer (consumer) may send a data analysis request message through (Nnwdaf_AnalyticsInfo_Request or Nnwdaf_ AnalyticsSubscription_Subscribe).

Step 25: After receiving a task request, the AnLF sends a model request to an MTLF, requesting the MTLF to feed back a model meeting the task.

In this embodiment of this application, the AnLF may send a model request through (Nnwdaf_MLMoldelInfo_Request). The request contains task description information, for example:
1. analytic ID, data analysis ID, for example, "UE mobility" (user mobility).
2. filter info, task restriction information, indicating a specific restriction condition for the task, such as a time and location required for restricting the task.
3. Information such as a target network element/UE, indicating a target network element or UE of the task, for example, the UE mobility may specify identification information such as a SUPI of the target UE.
4. reporting info, reporting restriction information, for specifying information, a format, and the like required to be reported for the task, for example, an arrangement manner is ascending order.

Step 26: Based on the task description information in step 25, the MTLF determines whether to perform independent training and generate a model that meets a requirement; or initiates federated learning if a model cannot be generated through independent training.

In this embodiment of this application, a case in which a model cannot be generated through independent training may be that the accuracy cannot reach a target accuracy due to the number of data sets being insufficient, data characteristics being not sufficiently distinguished, or the like.

Step 27: A network element device initiating federated training such as a model training network element MTLF sends a request to a network element with a repository capability such as an NRF to discover a device such as a network element capable of federated learning training.

In this embodiment of this application, the model training network element MTLF can send a discovery request through (Nnrf_NFDiscovery_Request).

These steps are similar to the prior art, except that:
the MTLF sends to the NRF a request for discovering a network element participating in federated learning, where the request needs to include:
1. Target NF service Name(s), service information of the target network element, where, for example, if a target service is a request for data analysis information, the information may be Nnwdaf_AnalyticsInfo_Request.
2. NF type of the target NF, type of the target network element, where if the network element of the target service is an NWDAF, the information may be NWDAF type.
3. Area of interest, area of interest, which may be TA(s), cell(s) or other forms, and is used to indicate requesting to discover, in the area of interest, a network element participating in federated learning.
   When the MTLF sends a request to the NRF, "training type" and "training condition restriction information" also needs to be included.
4. Training type, indicating a training type supported by the network element device. For example, in this embodiment, if the network element expects to perform federated learning, to-be-obtained network element information is expected to support federated learning training. In this case, the information may be information indicating that the network element supports federated learning, for example, "federated learning".
5. Training condition restriction information, indicating filtering information of the network element devices to further narrow a range of network element devices to select more appropriate network elements, for example, "federated learning time information" and "required data information", including at least one of the following:
   supported federated learning time, indicating target time information for planned federated learning, so as to select a network element device capable of performing federated learning within this time range, where the time information may be a future time period, for example, "10:00 pm to 6:00 am the next day"; and
   required data information, indicating data information that can be covered, obtained, and provided by the target network element, including information such as data type, data characteristics, and data amount.

Step 28: The NRF returns device information such as network elements meeting search information in step 27 to the MTLF.

In this embodiment of this application, the capability repository network element such as the NRF returns network element device information meeting a training condition restriciton information defined in step 26 to the federated learning initiator, and may return a response message through (Nnrf_NFDiscovery_Request).

The response needs to include:
1. Identification information of the network element device; indicating FQDN, IP address, and the like of the target network element and device.
2. Type information of the network element device, such as NWDAF.
3. Capability information of the network element device, including at least one of the following:
   training type, indicating a training type supported by the network element device that is expected to obtain, such as "federated learning";
   supported federated learning time, indicating a federated learning time supported by the network element, during which there is relatively good performance of federated learning, for example, "10:00 pm to 6:00 am the next day"; and
   metadata information, indicating data information that can be covered, obtained, and provided by the network element, including information such as data type, data characteristics, and data amount.

Step 29: Based on the information returned in step 28, the MTLF determines and searches devices such as a network element for participating in the training, and the MTLF performs federated learning along with devices such as the discovered network element.

Step 30: After training ends, the MTLF sends a feedback model to the AnLF, including description information for the task.
1. Analytic ID, task type indication information.
2. Task restriction information, which is information further describing a task requirement, such as a restriction time or a location.
3. Model and the like.
   Identification information and capability information of federated learning members may be further included, including at least one of the following:
4. Federated learning information, indicating the current training to be completed using federated learning.
5. Identification information of members participating in federated learning, which may be identification and address information of the members, such as FQDNs or IP addresses. The MTLF sends the information of network elements participating in federated learning and other devices to the AnLF, so that the AnLF can perform reasoning of federated learning subsequently.
6. Capability information of members participating in federated learning, including time information supporting federated learning and data information of the device itself.

Step 31: After receiving information such as the model fed back, the AnLF performs model reasoning.

In this embodiment of this application, the AnLF may perform cooperative reasoning based on device information such as network elements participating in federated learning in the obtained federated learning information.

Step 32: The AnLF feeds back a task report to the consumer based on a reasoning result.

It should be noted that for the related descriptions and beneficial effects of the foregoing steps 21 to 32, reference may be made to the descriptions in the foregoing embodiments, and details are not repeated herein.

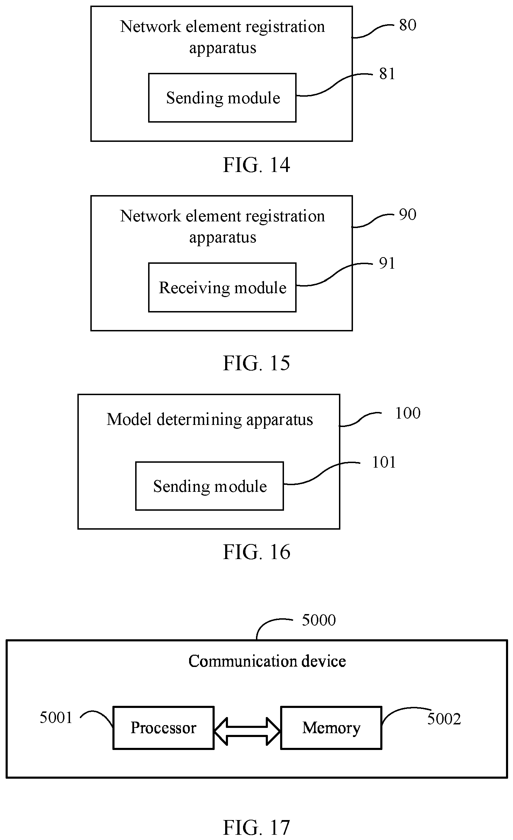

FIG. 14 is a possible schematic structural diagram of a network element registration apparatus included in the embodiments of this application. As shown in FIG. 14, the network element registration apparatus 80 may include a sending module 81.

The sending module 81 is configured to send a registration request to a second network element, where the registration request is used for requesting registration of federated learning capability information of the first network element with the second network element, and the federated learning capability information of the first network element includes at least one of the following: type information of federated learning training supported by the first network element, time information of federated learning training supported by the first network element, and metadata information possessed by the first network element.

This embodiment of this application provides a network element registration apparatus. The network element registration apparatus can register the federated learning capability information of the first network element with the second network element through a registration request, so as to implement registration of the first network element with the second network element, thereby enabling other network elements to discover, through the second network element, the first network element capable of federated learning training. This resolves the problem of how the first network element registers the federated learning capability information with the second network element and can be discovered by other network elements.

In a possible implementation, the type information of federated learning training supported by the first network element includes at least one of the following: indication information of whether the first network element supports federated learning training, a horizontal federated learning training type, a vertical federated learning training type, a federated learning server capability, and a federated learning client capability.

In a possible implementation, the metadata information possessed by the first network element includes at least one of the following: an input data type, an output data type, a data amount, and a data range.

In a possible implementation, the data range includes at least one of the following: a service area of the first network element, an area in which the first network element is able to collect data, and an object from which the first network element is able to collect data.

In a possible implementation, the registration request further includes at least one of the following: identification information of the first network element, analytics ID information supported by the first network element, information about a model filter supported by the first network element, and information about a network element type of the first network element, where the network element type includes a federated learning server network element type and/or a federated learning client network element type.

In a possible implementation, the analytics ID information corresponds to the type information of the federated learning training.

In a possible implementation, the analytics ID information corresponds to the federated learning capability information of the first network element.

In a possible implementation, the information about the model filter includes information about a model filter corresponding to a model generated by the first network element through federated learning.

In a possible implementation, the federated learning capability information of the first network element further includes at least one of the following: information about an algorithm on which federated learning training of the first network element is based; information about a model accuracy reachable by federated learning training of the first network element; speed information of federated learning training of the first network element; information about a model description manner supported by the first network element; information about model sharability supported by the first network element; manufacturer information of the first network element; and information about the quantity of federated learning models supported by the first network element.

In a possible implementation, the speed information of federated learning training of the first network element includes information about a duration required for a model obtained based on federated learning training by the first network element to reach a target accuracy of the model.

The network element registration apparatus provided in the embodiments of this application is capable of implementing the processes implemented by the first network element in the method embodiments, with the same technical effects achieved. To avoid repetition, details are not described herein again.

FIG. 15 is a possible schematic structural diagram of a network element registration apparatus included in the embodiments of this application. As shown in FIG. 15, the network element registration apparatus 90 may include a receiving module 91.

The receiving module 91 is configured to receive a registration request sent by a first network element, where the registration request is used to request registration of federated learning capability information of the first network element to a second network element, and the federated learning capability information of the first network element includes at least one of the following: type information of federated learning training supported by the first network element, time information of federated learning training supported by the first network element, and metadata information possessed by the first network element.

This embodiment of this application provides a network element registration apparatus. The network element registration apparatus may receive a registration request sent by the first network element can to register the federated learning capability information of the first network element with the second network element, so as to implement registration of the first network element with the second network element, thereby enabling other network elements to discover, through the second network element, the first network element capable of federated learning training. This resolves the problem of how the first network element registers the federated learning capability information with the second network element and can be discovered by other network elements.

In a possible implementation, the federated learning capability information of the first network element further includes at least one of the following:
information about an algorithm on which federated learning training of the first network element is based; information about a model accuracy reachable by federated learning training of the first network element; speed information of federated learning training of the first network element; information about a model description manner supported by the first network element; information about model sharability supported by the first network element; manufacturer information of the first network element; and information about the quantity of federated learning models supported by the first network element.

In a possible implementation, the receiving module 91 is further configured to receive a discovery request sent by a third network element. The discovery request is used to request to discover a network element capable of federated learning training, and the discovery request includes first information, where the first information includes at least one of the following: analytics ID information corresponding to a target task, type information of federated learning training corresponding to the target task, time information of federated learning training corresponding to the target task, metadata information of a network element of federated learning training corresponding to the target task, network element type requirement information, and network element quantity requirement information. The network element type requirement information is used to indicate a network element type corresponding to a to-be-discovered network element capable of federated learning training, where the network element type includes a federated learning server network element type and/or a federated learning client network element type; and the network element quantity requirement information is used to indicate a requirement on the quantityof to-be-discovered network elements capable of federated learning training.

In a possible implementation, the first information further includes at least one of the following: information about an algorithm on which federated learning training corresponding to the target task is based, information about a model accuracy reachable by federated learning training corresponding to the target task, speed information of the federated learning training corresponding to the target task, information about a model description manner supported by a network element of federated learning training corresponding to the target task, information about model sharability supported by a network element of federated learning training corresponding to the target task, manufacturer information of a network element of federated learning training corresponding to the target task, and information about the quantity of federated learning models supported by a network element of federated learning training corresponding to the target task.

In a possible implementation, the network element registration apparatus 90 provided in this embodiment of this application further includes a determining module. The determining module is configured to determine a target network element based on the discovery request after the receiving module 91 receives the discovery request sent by the third network element, and federated learning capability information of the target network element matches the first information.

In a possible implementation, the determining module is specifically configured to determine the target network element based on the analytics ID information corresponding to the target task, where the target network element supports federated learning training corresponding to the analytics ID information; determine the target network element based on the type of federated learning training corresponding to the target task, where the target network element supports the type of federated learning training corresponding to the target task; determine the target network element based on the time information of federated learning training corresponding to the target task, where the target network element supports federated learning training performed at a time corresponding to target time information, and the target time information is the time information of federated learning training corresponding to the target task; determine the target network element based on the metadata information possessed by the network element of federated learning training corresponding to the target task, where the target network element supports the metadata information possessed by the network element of federated learning training corresponding to the target task; determine the target network element based on the network element quantity requirement information, where the quantity of target network elements meets the network element quantity requirement information; and determine the target network element based on the network element type requirement information, where the network element type of the target network element meets the network element type requirement information.

In a possible implementation, in a case that the second network element determines the target network element based on the network element quantity requirement information, the determining module is configured to: in a case that the quantity of network elements capable of federated learning training and discovered by the second network element is less than the quantity of network elements indicated by the network element quantity requirement information, determine the discovered network element capable of federated learning training as the target network element.

In a possible implementation, the network element registration apparatus 90 provided in this embodiment of this application further includes a sending module. The sending module is configured to send a discovery response to the third network element after the determining module determines the target network element based on the discovery request, where the discovery response includes identification information or address information of the target network element.

In a possible implementation, the discovery response further includes second information, and the second information includes at least one of the following: type information of federated learning training supported by the target network element, time information of federated learning training supported by the target network element, and metadata information possessed by the target network element.

In a possible implementation, in a case that the quantity of network elements capable of federated learning training and discovered by the second network element is less than the quantity of network elements indicated by the network element quantity requirement information, the discovery response further includes third information, where the third information includes at least one of the following: first indication information, where the first indication information is used to indicate that the quantity of target network elements is less than the quantity of network elements indicated by the network element quantity requirement information; information about the quantity of target network elements; and fourth information, where the fourth information is used for suggesting the third network element to postpone discovery of a network element capable of federated learning training, and the fourth information includes time information for postponing discovery of a network element capable of federated learning training.

The network element registration apparatus provided in the embodiments of this application is capable of implementing the processes implemented by the second network element in the method embodiments, with the same technical effects achieved. To avoid repetition, details are not described herein again.

FIG. 16 is a possible schematic structural diagram of a model determining apparatus included in the embodiments of this application. As shown in FIG. 16, the model determining apparatus 100 may include a sending module 101.

The sending module 101 is further configured to send a discovery request to a second network element. The discovery request is used to request to discover a network element capable of federated learning training, and the discovery request includes first information, where the first information includes at least one of the following: analytics ID information corresponding to a target task, type information of federated learning training corresponding to the target task, time information of federated learning training corresponding to the target task, metadata information of a network element of federated learning training corresponding to the target task, network element type requirement information, and network element quantity requirement information. The network element type requirement information is used to indicate a network element type corresponding to a to-be-discovered network element capable of federated learning training, where the network element type includes a federated learning server network element type and/or a federated learning client network element type; and the network element quantity requirement information is used to indicate a requirement on the quantity of to-be-discovered network elements capable of federated learning training.

This embodiment of this application provides a model determining apparatus. The model determining apparatus may search, through a discovery request, the second network element for a network element capable of federated learning training. The discovery request includes first information; therefore, the third network element can discover the target network element matching the first information, so as to perform federated learning training along with the discovered target network element capable of federated learning training.

In a possible implementation, the metadata information possessed by the network element of federated learning training corresponding to the target task includes at least one of the following: an input data type, an output data type, a data amount, and a data range.

In a possible implementation, the first information further includes at least one of the following: information about an algorithm on which federated learning training corresponding to the target task is based, information about a model accuracy reachable by federated learning training corresponding to the target task, speed information of the federated learning training corresponding to the target task, information about a model description manner supported by a network element of federated learning training corresponding to the target task, information about model sharability supported by a network element of federated learning training corresponding to the target task, manufacturer information of a network element of federated learning training corresponding to the target task, and information about the quantity of federated learning models supported by a network element of federated learning training corresponding to the target task.

In a possible implementation, the model determining apparatus 100 provided in this embodiment of this application further includes a receiving module and an obtaining module. The receiving module is configured to receive a discovery response sent by the second network element after the sending module 101 sends the discovery request to the second network element, where the discovery response includes identification information or address information of the target network element, and the target network element is a network element supporting federated learning training. The obtaining module is configured to perform federated learning training along with the target network element to obtain model information corresponding to the target task.

In a possible implementation, the discovery response further includes second information, and the second information includes at least one of the following: type information of federated learning training supported by the target network element, time information of federated learning training supported by the target network element, and metadata information possessed by the target network element.

In a possible implementation, in a case that the quantity of network elements capable of federated learning training and discovered by the second network element is less than the quantity of network elements indicated by the network element quantity requirement information, the discovery response further includes third information, where the third information includes at least one of the following: first indication information, where the first indication information is used to indicate that the quantity of target network elements is less than the quantity of network elements indicated by the network element quantity requirement information; information about the quantity of target network elements; and fourth information, where the fourth information is used for suggesting the third network element to postpone discovery of a network element capable of federated learning training, and the fourth information includes time information for postponing discovery of a network element capable of federated learning training.

In a possible implementation, the model determining apparatus 100 provided in this embodiment of this application further includes a selection module. The selection module is configured to select all or part of the target network elements for federated learning training after the receiving module receives the discovery response sent by the second network element.

In a possible implementation, the receiving module is further configured to receive a model request sent by a fourth network element before the sending module 101 sends the discovery request to the second network element, where the model request is used to request model information corresponding to the target task, and the model request includes at least one of the following: analytics ID information corresponding to the target task, and restriction information corresponding to the target task.

In a possible implementation, the sending module 101 is further configured to send a model response to the fourth network element after the obtaining module obtains the model information corresponding to the target task through federated learning training with the target network element, where the model response includes the model information corresponding to the target task, and the model information is used for performing model reasoning by the fourth network element.

In a possible implementation, the model determining apparatus 100 provided in this embodiment of this application further includes an execution module. The restriction information corresponding to the target task includes information about area of interest or information about a target terminal. The execution module is configured to perform federated learning training for the target task in a case that the third network element is unable obtain training data of the target task corresponding to the area of interest or the target terminal.

In a possible implementation, the model determining apparatus 100 provided in this embodiment of this application further includes a determining module. The restriction information corresponding to the target task includes information about area of interest or information about a target terminal. The determining module is configured to: based on the information about area of interest or the information about the target terminal, the metadata information possessed by the network element of federated learning training corresponding to the target task; where the metadata information includes a data range for the network elements of federated learning training.

In a possible implementation, the model information corresponding to the target task includes at least one of the following: target information, and information related to federated learning training, and the target information includes at least one of the following: model description information corresponding to the target task, model file corresponding to the target task, and model repository address information corresponding to the target task.

In a possible implementation, the information related to federated learning training includes at least one of the following: second indication information, identification information of network elements participating in federated learning training, and capability information of network elements participating in federated learning training, where the second indication information is used to indicate that the model information corresponding to the target task is model information obtained through federated learning training.

The model determining apparatus provided in the embodiments of this application is capable of implementing the processes implemented by the third network element in the method embodiments, with the same technical effects achieved. To avoid repetition, details are not described herein again.

Optionally, as shown in FIG. 17, an embodiment of this application further provides a communication device 5000, including a processor 5001 and a memory 5002, and a program or instructions executable on the processor 5001 are stored in the memory 5002. For example, when the communication device 5000 is a network element and when the program or the instructions are executed by the processor 5001, the steps of the foregoing embodiments of the method for the first network element side are implemented, with the same technical effects achieved; the steps of the foregoing embodiments of the method for the second network element side are implemented, with the same technical effects achieved; the steps of the foregoing embodiments of the method for the third network element side are implemented, with the same technical effects achieved. To avoid repetition, details are not described herein again.

An embodiment of this application further provides a network element, including a processor and a communication interface, where the communication interface is configured to send a registration request to a second network element, where the registration request is used for requesting registration of federated learning capability information of the first network element with the second network element, and the federated learning capability information of the first network element includes at least one of the following: type information of federated learning training supported by the first network element, time information of federated learning training supported by the first network element, and metadata information possessed by the first network element. This network element embodiment corresponds to the foregoing first network element-side method embodiments, and the implementation processes and implementations of the foregoing method embodiments can be applied to the network element embodiments, with the same technical effects achieved.

An embodiment of this application further provides a network element, including a processor and a communication interface, where the communication interface is configured to receive a registration request sent by a first network element, where the registration request is used for requesting registration of federated learning capability information of the first network element to a second network element, and the federated learning capability information of the first network element includes at least one of the following: type information of federated learning training supported by the first network element, time information of federated learning training supported by the first network element, and metadata information possessed by the first network element. This network element embodiment corresponds to the foregoing second network element-side method embodiments, and the implementation processes and implementations of the foregoing method embodiments can be applied to the network element embodiments, with the same technical effects achieved.

An embodiment of this application further provides a network element, including a processor and a communication interface. The communication interface is configured to send a discovery request to a second network element, where the discovery request is used to request to discover a network element capable of federated learning training, and the discovery request includes first information, where the first information includes at least one of the following: analytics ID information corresponding to a target task, type information of federated learning training corresponding to the target task, time information of federated learning training corresponding to the target task, metadata information of a network element of federated learning training corresponding to the target task, network element type requirement information, and network element quantity requirement information. The network element type requirement information is used to indicate a network element type corresponding to a to-be-discovered network element capable of federated learning training, where the network element type includes a federated learning server network element type and/or a federated learning client network element type; and the network element quantity requirement information is used to indicate a requirement on the quantity of to-be-discovered network elements capable of federated learning training. This network element embodiment corresponds to the foregoing third network element-side method embodiments, and the implementation processes and implementations of the foregoing method embodiments can be applied to the network element embodiments, with the same technical effects achieved.

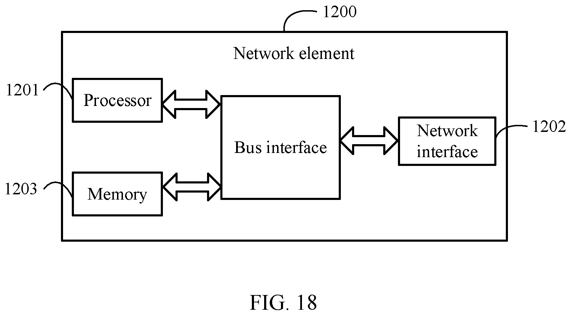

Specifically, FIG. 18 is a schematic structural diagram of hardware of a network element according to an embodiment of this application. The network element is a first network element, or the network element is a second network element, or the network element is a third network element.

As shown in FIG. 18, the network element 1200 includes a processor 1201, a network interface 1202, and a memory 1203. The network interface 1202 is, for example, a common public wireless interface.

Specifically, the network element 1200 in this embodiment of this application further includes: an instruction or a program stored in the memory 1203 and executable on the processor 1201. The processor 1201 invokes the instruction or program in the memory 1203 to execute the method executed by the foregoing modules, with the same technical effects achieved. To avoid repetition, details are not repeated herein.

The network element provided in this embodiment of this application is capable of implementing the processes implemented by the first network element, the second network element, and the third network element in the foregoing method embodiments, with the same technical effects achieved. To avoid repetition, details are not described herein again.

An embodiment of this application further provides a readable storage medium, where a program or instructions are stored in the readable storage medium. When the program or the instructions are executed by a processor, the processes of the foregoing embodiments of the method described above can be implemented, with the same technical effects achieved. To avoid repetition, details are not described herein again.

The processor is a processor in the communication device described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing method embodiments, with the same technical effects achieved. To avoid repetition, details are not repeated herein.

An embodiment of this application further provides a communication system, including a first network element, a second network element, and a third network element, where the first network element may be configured to execute the steps of the network element registration method described above, the second network element may be configured to execute the steps of the network element registration method described above, and the third network element may be configured to execute the steps of the model determining method described above.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A network element registration method, wherein the method comprises:
sending, by a first network element, a registration request to a second network element, wherein the registration request is used to request registration of federated learning capability information of the first network element with the second network element, and the federated learning capability information of the first network element comprises at least one of the following: type information of federated learning training supported by the first network element, time information of federated learning training supported by the first network element, and metadata information possessed by the first network element.

2. The method according to claim 1, wherein the type information of the federated learning training supported by the first network element comprises at least one of the following: indication information of whether the first network element supports federated learning training, a horizontal federated learning training type, a vertical federated learning training type, a federated learning server capability, and a federated learning client capability.

3. The method according to claim 1, wherein the metadata information possessed by the first network element comprises at least one of the following: an input data type, an output data type, a data amount, and a data range.

4. The method according to claim 3, wherein the data range comprises at least one of the following: a service area of the first network element, an area in which the first network element is able to collect data, and an object from which the first network element is able to collect data.

5. The method according to any one of claims 1 to 4, wherein the registration request further comprises at least one of the following: identification information of the first network element, analytics ID information supported by the first network element, information about a model filter supported by the first network element, and information about a network element type of the first network element, wherein the network element type comprises a federated learning server network element type and/or a federated learning client network element type.

6. The method according to claim 5, wherein the analytics ID information corresponds to the type information of the federated learning training.

7. The method according to claim 5, wherein the analytics ID information corresponds to the federated learning capability information of the first network element.

8. The method according to claim 5, wherein the information about the model filter comprises information about a model filter corresponding to a model generated by the first network element through federated learning.

9. The method according to claim 1, wherein the federated learning capability information of the first network element further comprises at least one of the following:
information about an algorithm on which federated learning training of the first network element is based;
information about a model accuracy reachable by the federated learning training of the first network element;
speed information of the federated learning training of the first network element;
information about a model description manner supported by the first network element;
information about model sharability supported by the first network element;
manufacturer information of the first network element; and
information about a quantity of federated learning models supported by the first network element.

10. The method according to claim 9, wherein the speed information of the federated learning training of the first network element comprises information about a duration required for a model obtained based on federated learning training by the first network element to reach a target accuracy of the model.

11. A network element registration method, wherein the method comprises:
receiving, by a second network element, a registration request sent by a first network element, wherein the registration request is used to request registration of federated learning capability information of the first network element with the second network element, and the federated learning capability information of the first network element comprises at least one of the following: type information of federated learning training supported by the first network element, time information of federated learning training supported by the first network element, and metadata information possessed by the first network element.

12. The method according to claim 11, wherein the federated learning capability information of the first network element further comprises at least one of the following:
information about an algorithm on which federated learning training of the first network element is based;
information about a model accuracy reachable by the federated learning training of the first network element;
speed information of the federated learning training of the first network element;
information about a model description manner supported by the first network element;
information about model sharability supported by the first network element;
manufacturer information of the first network element; and
information about a quantity of federated learning models supported by the first network element.

13. The method according to claim 11, wherein after the receiving, by a second network element, a registration request sent by a first network element, the method further comprises:
receiving, by the second network element, a discovery request sent by a third network element, wherein the discovery request is used to request to discover a network element capable of federated learning training, the discovery request comprises first information, and the first information comprises at least one of the following: analytics ID information corresponding to a target task, type information of federated learning training corresponding to the target task, time information of the federated learning training corresponding to the target task, metadata information of a network element of the federated learning training corresponding to the target task, network element type requirement information, and network element quantity requirement information; wherein the network element type requirement information is used to indicate a network element type corresponding to a to-be-discovered network element capable of federated learning training, and the network element type comprises a federated learning server network element type and/or a federated learning client network element type; and the network element quantity requirement information is used to indicate a requirement on the quantity of to-be-discovered network elements capable of federated learning training.

14. The method according to claim 13, wherein the first information further comprises at least one of the following:
information about an algorithm on which the federated learning training corresponding to the target task is based;
information about a model accuracy reachable by the federated learning training corresponding to the target task;
speed information of the federated learning training corresponding to the target task;
information about a model description manner supported by a network element of the federated learning training corresponding to the target task;
information about model sharability supported by the network element of the federated learning training corresponding to the target task;
manufacturer information of the network element of the federated learning training corresponding to the target task; and
information about the quantity of federated learning models supported by the network element of the federated learning training corresponding to the target task.

15. The method according to claim 13 or 14, wherein after the receiving, by the second network element, a discovery request sent by a third network element, the method further comprises:
determining, by the second network element, a target network element based on the discovery request, wherein federated learning capability information of the target network element matches the first information.

16. The method according to claim 15, wherein the determining, by the second network element, a target network element based on the discovery request comprises at least one of the following:
determining, by the second network element, the target network element based on the analytics ID information corresponding to the target task, wherein the target network element supports federated learning training corresponding to the analytics ID information;
determining, by the second network element, the target network element based on a type of the federated learning training corresponding to the target task, wherein the target network element supports the type of the federated learning training corresponding to the target task;
determining, by the second network element, the target network element based on the time information of the federated learning training corresponding to the target task, wherein the target network element supports federated learning training performed at a time corresponding to target time information, and the target time information is the time information of the federated learning training corresponding to the target task;
determining, by the second network element, the target network element based on the metadata information possessed by the network element of the federated learning training corresponding to the target task, wherein the target network element supports the metadata information possessed by the network element of the federated learning training corresponding to the target task;
determining, by the second network element, the target network element based on the network element quantity requirement information, wherein the quantity of target network elements meets the network element quantity requirement information; and
determining, by the second network element, the target network element based on the network element type requirement information, wherein network element type of the target network element meets the network element type requirement information.

17. The method according to claim 16, wherein in a case that the second network element determines the target network element based on the network element quantity requirement information, the method further comprises:
in a case that the quantity of network elements capable of federated learning training and discovered by the second network element is less than the quantity of network elements indicated by the network element quantity requirement information, determining, by the second network element, discovered network element capable of federated learning training as the target network element.

18. The method according to claim 15, wherein after the determining, by the second network element, a target network element based on the discovery request, the method further comprises:
sending, by the second network element, a discovery response to the third network element, wherein the discovery response comprises identification information or address information of the target network element.

19. The method according to claim 18, wherein the discovery response further comprises second information, and the second information comprises at least one of the following:
type information of federated learning training supported by the target network element, time information of federated learning training supported by the target network element, and metadata information possessed by the target network element.

20. The method according to claim 18, wherein in a case that the quantity of network elements capable of federated learning training and discovered by the second network element is less than the quantity of network elements indicated by the network element quantity requirement information, the discovery response further comprises third information, wherein the third information comprises at least one of the following:
first indication information, wherein the first indication information is used to indicate that the quantity of target network elements is less than the quantity of network elements indicated by the network element quantity requirement information;
information about the quantity of target network elements; and
fourth information, wherein the fourth information is used for suggesting the third network element to postpone discovery of a network element capable of federated learning training, and the fourth information comprises time information for postponing discovery of a network element capable of federated learning training.

21. A model determining method, wherein the method comprises:
sending, by a third network element, a discovery request to a second network element, wherein the discovery request is used to request to discover a network element capable of federated learning training, the discovery request comprises first information, and the first information comprises at least one of the following: analytics ID information corresponding to a target task, type information of the federated learning training corresponding to the target task, time information of the federated learning training corresponding to the target task, metadata information of a network element of the federated learning training corresponding to the target task, network element type requirement information, and network element quantity requirement information; wherein the network element type requirement information is used to indicate a network element type corresponding to a to-be-discovered network element capable of federated learning training, the network element type comprises a federated learning server network element type and/or a federated learning client network element type, and the network element quantity requirement information is used to indicate a requirement on the quantity of to-be-discovered network elements capable of federated learning training.

22. The method according to claim 21, wherein the metadata information possessed by the network element of the federated learning training corresponding to the target task comprises at least one of the following: an input data type, an output data type, a data amount, and a data range.

23. The method according to claim 21, wherein the first information further comprises at least one of the following:
information about an algorithm on which federated learning training corresponding to the target task is based;
information about a model accuracy reachable by the federated learning training corresponding to the target task;
speed information of the federated learning training corresponding to the target task;
information about a model description manner supported by a network element of the federated learning training corresponding to the target task;
information about model sharability supported by the network element of the federated learning training corresponding to the target task;
manufacturer information of the network element of the federated learning training corresponding to the target task; and
information about the quantity of federated learning models supported by the network element of the federated learning training corresponding to the target task.

24. The method according to any one of claims 21 to 23, wherein after the sending, by a third network element, a discovery request to a second network element, the method further comprises:
receiving, by the third network element, a discovery response sent by the second network element, wherein the discovery response comprises identification information or address information of a target network element, and the target network element is a network element supporting federated learning training; and performing, by the third network element, federated learning training along with the target network element to obtain model information corresponding to the target task.

25. The method according to claim 24, wherein the discovery response further comprises second information, and the second information comprises at least one of the following:
type information of federated learning training supported by the target network element, time information of federated learning training supported by the target network element, and metadata information possessed by the target network element.

26. The method according to claim 24, wherein in a case that the quantity of network elements capable of federated learning training and discovered by the second network element is less than the quantity of network elements indicated by the network element quantity requirement information, the discovery response further comprises third information, wherein the third information comprises at least one of the following:
first indication information, wherein the first indication information is used to indicate that the quantity of target network elements is less than the quantity of network elements indicated by the network element quantity requirement information;
information about the quantity of target network elements; and
fourth information, wherein the fourth information is used for suggesting the third network element to postpone discovery of a network element capable of federated learning training, and the fourth information comprises time information for postponing discovery of a network element capable of federated learning training.

27. The method according to claim 24, wherein after the receiving, by the third network element, a discovery response sent by the second network element, the method further comprises:
selecting, by the third network element, all or part of the target network elements for federated learning training.

28. The method according to claim 21, wherein before the sending, by a third network element, a discovery request to a second network element, the method further comprises:
receiving, by the third network element, a model request sent by a fourth network element, wherein the model request is used to request model information corresponding to the target task, and the model request comprises at least one of the following: analytics ID information corresponding to the target task, and restriction information corresponding to the target task.

29. The method according to claim 24, wherein after the performing, by the third network element, federated learning training along with the target network element to obtain model information corresponding to the target task, the method further comprises:
sending, by the third network element, a model response to the fourth network element, wherein the model response comprises the model information corresponding to the target task, and the model information is used for performing model reasoning by the fourth network element.

30. The method according to claim 28, wherein the restriction information corresponding to the target task comprises information about area of interest or information about a target terminal; and the method further comprises:
in a case that the third network element is unable to obtain training data of the target task corresponding to the area of interest or the target terminal, performing, by the third network element, federated learning training for the target task.

31. The method according to claim 28, wherein the restriction information corresponding to the target task comprises information about area of interest or information about a target terminal; and the method further comprises:
determining, by the third network element based on the information about the area of interest or the information about the target terminal, the metadata information possessed by the network element of federated learning training corresponding to the target task; and the metadata information comprises a data range for the network elements of federated learning training.

32. The method according to claim 28, wherein the model information corresponding to the target task comprises at least one of the following: target information, and information related to federated learning training, and the target information comprises at least one of the following: model description information corresponding to the target task, model file corresponding to the target task, and model repository address information corresponding to the target task.

33. The method according to claim 32, wherein the information related to federated learning training comprises at least one of the following: second indication information, identification information of network elements participating in federated learning training, and capability information of network elements participating in federated learning training, wherein the second indication information is used to indicate that the model information corresponding to the target task is model information obtained through federated learning training.

34. A network element registration apparatus, applied to a first network element, wherein the apparatus comprises a sending module; and
the sending module is configured to send a registration request to a second network element, wherein the registration request is used to request registration of federated learning capability information of the first network element with the second network element, and the federated learning capability information of the first network element comprises at least one of the following: type information of federated learning training supported by the first network element, time information of federated learning training supported by the first network element, and metadata information possessed by the first network element.

35. A network element registration apparatus, applied to a second network element, wherein the apparatus comprises a receiving module; and
the receiving module is configured to receive a registration request sent by a first network element, wherein the registration request is used for requesting registration of federated learning capability information of the first network element to a second network element, and the federated learning capability information of the first network element comprises at least one of the following: type information of federated learning training supported by the first network element, time information of federated learning training supported by the first network element, and metadata information possessed by the first network element.

36. A model determining apparatus, wherein the apparatus comprises a sending module; and
the sending module sends a discovery request to a second network element, wherein the discovery request is used to request to discover a network element capable of federated learning training, the discovery request comprises first information, and the first information comprises at least one of the following: analytics ID information corresponding to a target task, type information of the federated learning training corresponding to the target task, time information of the federated learning training corresponding to the target task, metadata information of a network element of the federated learning training corresponding to the target task, network element type requirement information, and network element quantity requirement information; wherein the network element type requirement information is used to indicate a network element type corresponding to a to-be-discovered network element capable of federated learning training, the network element type comprises a federated learning server network element type and/or a federated learning client network element type, and the network element quantity requirement information is used to indicate a requirement on the quantity of to-be-discovered network elements capable of federated learning training.

37. A network element, comprising a processor and a memory, wherein a program or instructions executable on the processor are stored in the memory, and when the program or the instructions are executed by the processor, steps of the network element registration method according to any one of claims 1 to 10 are implemented.

38. A network element, comprising a processor and a memory, wherein a program or instructions executable on the processor are stored in the memory, and when the program or the instructions are executed by the processor, steps of the network element registration method according to any one of claims 11 to 20 are implemented.

39. A network element, comprising a processor and a memory, wherein a program or instructions executable on the processor are stored in the memory, and when the program or the instructions are executed by the processor, steps of the model determining method according to any one of claims 21 to 33 are implemented.

40. A communication system, wherein the communication system comprises the network element registration apparatus according to claim 34, the network element registration apparatus according to claim 35, and the model determining apparatus according to claim 36; or
the communication system comprises the network element according to claims 37 to 39.

41. A readable storage medium, wherein the readable storage medium stores a program or instructions, and when the program or instructions are executed by a processor, steps of the network element registration method according to any one of claims 1 to 10 are implemented, or steps of the network element registration method according to any one of claims 11 to 20 are implemented, or steps of the model determining method according to any one of claims 21 to 33 are implemented.

42. A chip, wherein the chip comprises a processor and a communication interface, the communication interface is coupled to the processor, and the processor is used to run a program or instructions to implement the network element registration method according to any one of claims 1 to 10, or the network element registration method according to any one of claims 11 to 20, or the model determining method according to any one of claims 21 to 33.

43. A computer program product, wherein when the program product is executed by at least one processor, the network element registration method according to any one of claims 1 to 10 are implemented; or the network element registration method according to any one of claims 11 to 20 are implemented; or the model determining method according to any one of claims 21 to 33 are implemented.

44. A network element, wherein the network element is configured to execute the network element registration method according to any one of claims 1 to 10.

45. A network element, wherein the network element is configured to execute the network element registration method according to any one of claims 11 to 20.

46. A network element, wherein the network element is configured to execute the model determining method according to any one of claims 21 to 33.
